# EUROPEAN PATENT SPECIFICATION

(11) **EP 1 783 023 B1**
(45) Date of publication and mention of the grant of the patent: **27.02.2008**
(21) Application number: 06255542.0
(22) Date of filing: 27.10.2006
(51) Int. Cl.: B60W 30/12, B60K 11/06

(54) **Vehicle with front and rear frame pivotable to each other for lane keeping**
Fahrzeug mit zueinander schwenkbaren Vorder- und Hinterrahmen zum Spurhalten
Véhicule pourvu des cadres avant et arrière pivotable pour suivre la voie

(30) Priority: 07.11.2005 JP 2005321701
(43) Date of publication of application: 09.05.2007
(73) Proprietor: Yamaha Hatsudoki Kabushiki Kaisha, Iwata-shi, Shizuoka-ken 438-8501 (JP)
(72) Inventor: Tsujii, Eiichiro, Iwata-shi Shizuoka-ken 438-8501 (JP)
(74) Representative: Price, Nigel John King

(56) References cited:
- EP-A- 1 671 877
- EP-A- 1 674 386
- WO-A-03/016943
- DE-A1- 3 029 373
- DE-A1- 3 909 258
- JP-A- 63 222 987
- US-A- 3 938 609

## Description

The present invention relates to a vehicle, and more particularly, to a vehicle capable of keeping a lane line.

Conventionally, there are known four-wheeled vehicles (automobiles), which recognize a lane line (extending in the travelling direction of the vehicle) and follow the lane line (see, for example, JP-A-2002-362396). With the automobile disclosed in JP-A-2002-362396, when the automobile is going to deviate from a lane line recognized by a monocular camera, steering of the automobile's front wheels is controlled to turn the automobile to keep the automobile following the lane line recognized by the monocular camera.

With the automobile disclosed in JP-A-2002-362396, however, steering of front wheels is controlled to turn the automobile to enable the lane line recognized by the monocular camera to be followed. There is, however, a problem in applying to motorcycles the lane line following technology for automobiles described in JP-A-2002-362396. With a motorcycle, if a steering angle is given to a front wheel by steering control of the front wheel, the vehicle body can fall down in the opposite direction to the direction in which the steering angle is given. This is because a centrifugal force inclines the vehicle body in an opposite direction to the direction in which the steering angle is given. Accordingly, motorcycles have the problem that it is difficult for a motorcycle to follow a lane line recognized by a camera since it is difficult to turn a motorcycle through steering control of a front wheel.

The invention has been thought of in view of this problem and has an aim of providing a vehicle capable of following a lane line without steering a front wheel.

DE 39 09 258 A1, on which the preamble of claim 1 is based, discloses a motorcycle having a frame assembly supporting a power unit, which is disposed between front and rear wheels, for driving the rear wheel. The frame assembly comprises a front frame supporting the front wheel and a rear frame supporting the rear drive wheel. The front frame is coupled to the rear frame and is swingable with respect to the rear frame laterally of the frame assembly. The rear wheel has a substantially flat tyre for suppressing banking movement of the rear frame. The front wheel has a round tyre for allowing banking movement of the front frame. A damping device is disposed between the front frame and the rear frame for damping banking movement of the front frame.

EP-A-1 671 877, which is admissible as prior art against the present application only under Article 54(3) EPC, discloses a motorcycle comprising a front frame supporting a front wheel and a rear frame supporting a rear wheel. The rear frame is attached to the front frame for rotation about an axis extending longitudinally of the vehicle. A damper is provided for damping rotation of the front frame with respect to the rear frame.

EP-A-1 674 386, which is admissible as prior art against the present application only under Article 54(3) EPC, also discloses a motorcycle having a front frame, supporting a front wheel, and a rear frame, supporting a rear wheel. The front frame is moveable relative to the rear frame. The motorcycle also has a centroid shifting means for shifting the centroid of the vehicle body by moving the front frame and the rear frame relative to one another.

According to the present invention there is provided a vehicle comprising:
a front frame which supports a front wheel; and
a rear frame which supports a rear wheel and to which the front frame is movably mounted;
characterised in that the vehicle further comprises:
centre of gravity moving means for moving one of the front frame and the rear frame relative to the other to thereby move the centre of gravity of the vehicle; and
lane line detection means for detecting a travelling direction of the vehicle; and
wherein the centre of gravity moving means is constructed and arranged to move the centre of gravity to maintain the vehicle on the lane line detected by the lane line detection means.

With the vehicle in one aspect, there are provided centre of gravity moving means, which moves a centre of gravity, and lane line detection means, which detects a travelling direction of the vehicle, and the centre of gravity is moved by the centre of gravity moving means whereby a lane line detected by the lane line detection means is kept, so that it is possible to positively move the centre of gravity laterally (in a vehicle width direction) irrespective of a driver's will and so it is possible to incline the vehicle body laterally (in the vehicle width direction), or to right the vehicle body. Thereby, in the case where the vehicle is going to deviate from the lane line (the travelling direction of the vehicle) detected by the lane line detection means, the vehicle body is inclined laterally (in the vehicle width direction) to thereby enable turning the vehicle and the vehicle body is righted to thereby enable the vehicle to travel straight, so that the vehicle can follow the lane line (the travelling direction of the vehicle) detected by the lane line detection means. Consequently, the vehicle can keep the lane line (the travelling direction of the vehicle) detected by the lane line detection means without steering control of the front wheel. Also, in the case where the vehicle is going to deviate from the lane line (the travelling direction of the vehicle) detected by the lane line detection means, it is possible to incline the vehicle body laterally (in the vehicle width direction), or to right the vehicle body, so that it is possible to inform a driver in a manner of bodily sensation of the fact that the vehicle is going to deviate from the lane line (the travelling direction of the vehicle) detected by the lane line detection means.

In the vehicle in one aspect, preferably, there are provided inclination detection means, which detects inclination of the vehicle body, speed detection means, which detects speed of the vehicle body, and control means, which controls the centre of gravity moving means on the basis of results of detection by the inclination detection means, the speed detection means, and the lane line detection means. With such construction, it is possible to predict a travelling direction of the vehicle on the basis of results of detection by the inclination detection means and the speed detection means, so that the centre of gravity moving means can be controlled by the control means on the basis of the predicted travelling direction of the vehicle and the lane line (the travelling direction of the vehicle) detected by the lane line detection means. Thereby, it is possible to appropriately move the centre of gravity according to the predicted travelling direction of the vehicle and the lane line (the travelling direction of the vehicle) detected by the lane line detection means.

In this case, preferably, the control means predicts a travelling direction of the vehicle on the basis of results of detection by the inclination detection means and the speed detection means and controls the centre of gravity moving means to inhibit the predicted travelling direction of the vehicle from deviating from that travelling direction of the vehicle, which is detected by the lane line detection means. With such construction, in the case where the vehicle is going to deviate from the lane line (the travelling direction of the vehicle) detected by the lane line detection means, the centre of gravity moving means controlled by the control means can move the centre of gravity so as to inhibit the predicted travelling direction of the vehicle from deviating from that lane line (that travelling direction of the vehicle), which is detected by the lane line detection means, so that it is possible to readily incline the vehicle body so that the vehicle keeps the lane line (the travelling direction of the vehicle), or to right the vehicle body.

In the vehicle in one aspect, preferably, the front frame and the rear frame are provided to be able to turn relative to each other about an axis extending in a longitudinal direction, and the centre of gravity moving means turns one of the front frame and the rear frame relative to the other to thereby move the centre of gravity. With such construction, one of the front frame and the rear frame can be readily moved relative to the other thereof by turning one of the front frame and the rear frame relative to the other, so that it is possible to readily move the centre of gravity.

In that construction, in which the front frame and the rear frame are provided to be able to turn relative to each other about an axis extending in a longitudinal direction, preferably, a steering angle in an opposite direction to that direction, in which the centre of gravity is moved by the centre of gravity moving means, is given to the rear wheel supported on the rear frame by turning one of the front frame and the rear frame relative to the other. With such construction, a steering angle in an opposite direction to a turning direction is given to the rear wheel, it is possible to decrease a turning radius at the time of turning. Thereby, it is possible to improve the vehicle body in quality of turning.

In that construction, in which the front frame and the rear frame are provided to be able to turn relative to each other about an axis extending in a longitudinal direction, preferably, the centre of gravity moving means comprises a cylinder, which turns one of the front frame and the rear frame relative to the other. Since the centre of gravity moving means can be simplified in mechanism by using a cylinder in this manner, it is possible in a simple construction to turn one of the front frame and the rear frame relative to the other.

In that construction, in which the front frame and the rear frame are provided to be able to turn relative to each other about an axis extending in a longitudinal direction, preferably, there is further provided a restriction member, which restricts an angle, by which the front frame turns relative to the rear frame. With such construction, it is possible to prevent the front frame from turning excessively relative to the rear frame.

In that construction, in which the front frame and the rear frame are provided to be able to turn relative to each other about an axis extending in a longitudinal direction, preferably, an extension of the axis extending in the longitudinal direction passes through the vicinity of a contact point between the rear wheel and the ground. With such construction, the rear wheel turns about the vicinity of a contact point between it and the ground in the case where the rear frame turns relative to the front frame, so that it is possible to inhibit the rear wheel from sliding relative to the ground.

In that construction, in which the front frame and the rear frame are provided to be able to turn relative to each other about an axis extending in a longitudinal direction, preferably, there is further provided a bearing arranged between the front frame and the rear frame to support the front frame and the rear frame to enable the same to turn relative to each other. With such construction, the bearing enables the front frame to smoothly turn relative to the rear frame about the axis extending in the longitudinal direction.

In this case, preferably, the front frame comprises a head pipe, the head pipe comprises a first convex-shaped bearing mount formed to project rearwardly of the head pipe, having a centre of turning on the axis extending in the longitudinal direction, and having an outer peripheral surface, to which the bearing is mounted, and the rear frame comprises a second concave-shaped bearing mount arranged in opposition to the first convex-shaped bearing mount of the head pipe, and having an inner peripheral surface, to which the bearing is mounted. With such construction, the front frame can be further readily turned relative to the rear frame by mounting the bearing to the first bearing mount of the head pipe and the second bearing mount of the rear frame.

In the vehicle in one aspect, preferably, there is further provided a torsion spring, which connects between the front frame and the rear frame. With such construction, the front frame and the rear frame can be put in a state of not turning relative to each other by a load (twist force) of the torsion spring in the case where control of the vehicle cannot be exercised due to failure of the centre of gravity moving means and the control means, so that a side of the front wheel and a side of the rear wheel can be arranged in parallel to each other. Thereby, running of the vehicle can be continued naturally also in the case where the centre of gravity moving means and the control means get out of order.

In this case, preferably, the torsion spring is put in a non-loaded state in the case where a side of the front wheel and a side of the rear wheel are arranged in parallel to each other. With such construction, a side of the front wheel and a side of the rear wheel can be readily arranged in parallel to each other by a load (twist force) of the torsion spring in the case where control of the vehicle cannot be exercised due to failure of the centre of gravity moving means and the control means.

Embodiments of the invention will now be described, by way of example only, with reference to the following drawings.

Fig. 1 is a side view showing a motorcycle constructed according to a first embodiment of the invention.

Fig. 2 is a partial cross sectional view showing the connection of the head pipe and main frame of the motorcycle, according to the first embodiment, shown in Fig. 1.

Fig. 3 is a partial top plan view in the direction of arrow P in Fig. 1.

Fig. 4 is a cross sectional view taken along the line 200-200 in Fig. 3.

Fig. 5 is a block diagram showing the construction of a pump part and a hydraulic cylinder in the motorcycle, according to the first embodiment, shown in Fig. 1.

Fig. 6 is a flowchart illustrating a lane line follow-up control method of the motorcycle according to the first embodiment of the invention.

Fig. 7 is a schematic view illustrating motion of the motorcycle, according to the first embodiment, shown in Fig. 6 at the time of lane line follow-up control.

Fig. 8 is a schematic view illustrating motion of the motorcycle, according to the first embodiment, shown in Fig. 6 at the time of lane line follow-up control.

Fig. 9 is a schematic view illustrating motion of the motorcycle, according to the first embodiment, shown in Fig. 6 at the time of lane line follow-up control.

Fig. 10 is a schematic view illustrating motion of the motorcycle, according to the first embodiment, shown in Fig. 6 at the time of lane line follow-up control.

Fig. 11 is a cross sectional view similar to Fig. 4 showing motions of the pump part and the hydraulic cylinder shown in Fig. 4 during operation.

Fig. 12 is a cross sectional view showing the periphery of a turning member according to a first modification of the first embodiment of the invention.

Fig. 13 is a side view showing a motorcycle constructed according to a second modification of the first embodiment of the invention.

Fig. 14 is a partial cross sectional view showing the connection of the head pipe and main frame of the motorcycle, according to the second modification of the first embodiment, shown in Fig. 13.

Fig. 15 is a partial side elevation viewed in the direction of arrow Q in Fig. 14.

Fig. 16 is a side view showing a motorcycle constructed according to a second embodiment of the invention.

Fig. 17 is a partial cross sectional view showing the connection of the head pipe and main frame of the motorcycle, according to the second embodiment, shown in Fig. 16.

Fig. 18 is a partial top plan view in the direction of arrow R in Fig. 16.

Fig. 19 is a side view showing a motorcycle constructed according to a third embodiment of the invention.

Fig. 20 is a partial cross sectional view showing the connection of the head pipe and main frame of the motorcycle, according to the third embodiment, shown in Fig. 19.

Fig. 21 is a perspective view showing the structure of a spring member in the motorcycle, according to the third embodiment, shown in Fig. 19.

Fig. 22 is a perspective view showing the structure of the spring member in the motorcycle, according to the third embodiment, shown in Fig. 19.

Fig. 23 is a view showing the structure of the spring member in the motorcycle, according to the third embodiment, shown in Fig. 19.

Fig. 24 is a top plan view in the direction of arrow S in Fig. 19.

### First embodiment

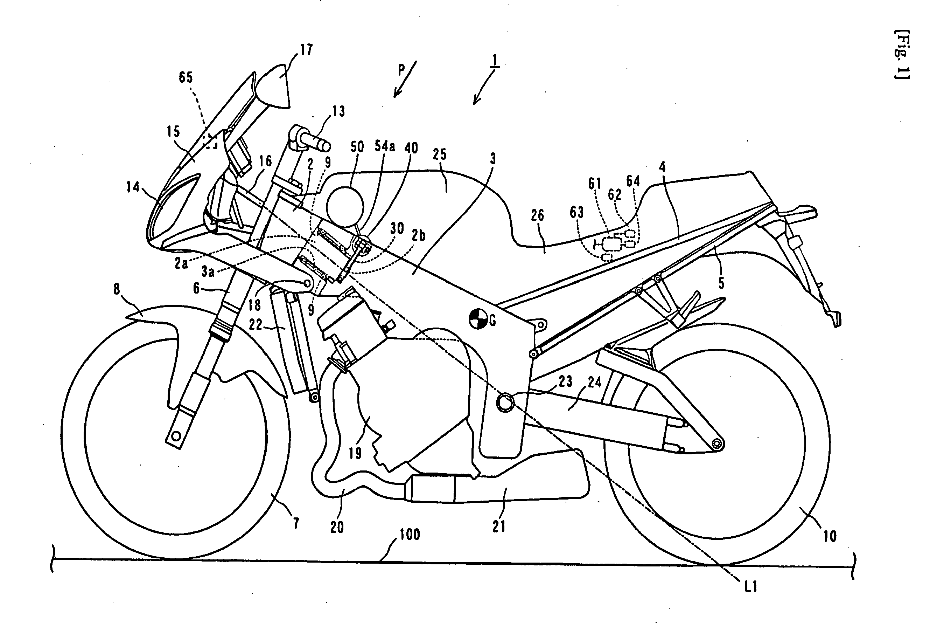

Fig. 1 is a side view showing a whole construction of a motorcycle according to a first embodiment of the invention.

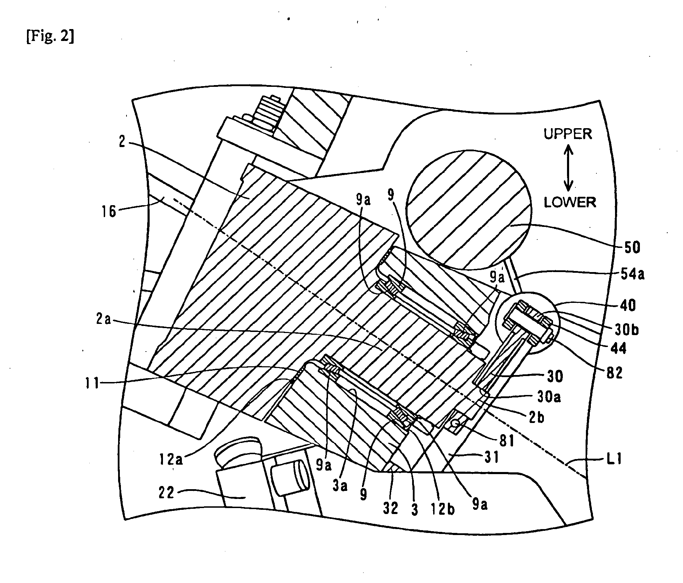

Figs. 2 to 4 are views showing a periphery of a connection of a head pipe and a main frame in the motorcycle, according to the first embodiment of the invention, shown in Fig. 1.

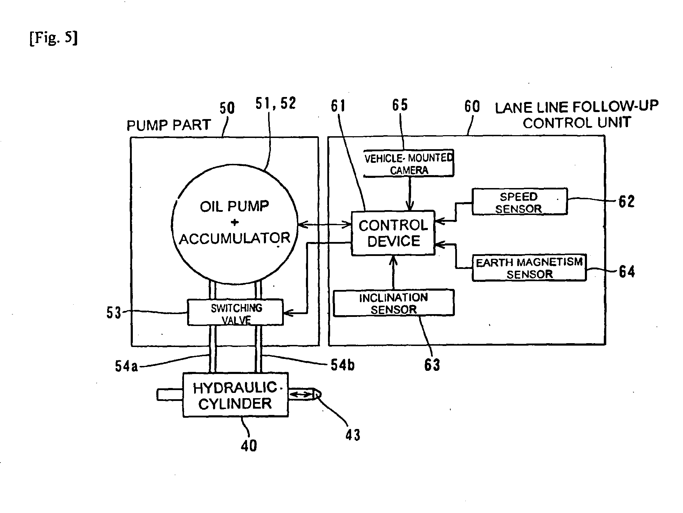

Fig. 5 is a block diagram showing the construction of a pump part and a hydraulic cylinder in the motorcycle, according to the first embodiment, shown in Fig. 1. The first embodiment will be described with respect to a motorcycle as an example of a vehicle according to the invention. The construction of the motorcycle 1 according to the first embodiment of the invention will be described below in detail with reference to Figs. 1 to 5.

In the motorcycle 1 according to the first embodiment of the invention, a main frame 3 is arranged rearwardly of a head pipe 2 as shown in Fig. 1. The head pipe 2 is exemplary of "front frame" in the invention, and the main frame 3 is exemplary of "rear frame" in the invention. The main frame 3 is formed to extend rearwardly downward. A seat rail 4 is connected to the main frame 3. A back stay 5 is connected between a rear portion of the main frame 3 and a rear end of the seat rail 4. The head pipe 2, the main frame 3, the seat rail 4, and the back stay 5 constitute a vehicle body frame.

A pair of front forks 6 having suspensions for absorption of vertical shocks is arranged below the head pipe 2. A front wheel 7 is mounted rotatably to lower ends of the pair of front forks 6. A front fender 8 is arranged above the front wheel 7 to cover the front wheel 7.

Here, according to the first embodiment, a rearwardly downwardly projecting shaft portion 2a in the form of a circular column is formed integrally with a rear portion of the head pipe 2 as shown in Fig. 2. The shaft portion 2a is an example of "first bearing mount" in the invention. Also, the main frame 3 is formed with a shaft insertion hole 3a, into which the shaft portion 2a of the head pipe 2 is inserted. The shaft insertion hole 3a is an example of "second bearing mount" in the invention. A conical roller bearing (tapered roller bearing) 9 having conical-shaped rollers 9a is arranged between an outer peripheral surface of the shaft portion 2a of the head pipe 2 and an inner peripheral surface of the shaft insertion hole 3a of the main frame 3. Thereby, the head pipe 2 can turn about a turning axis L1, which extends longitudinally of the shaft portion 2a, relative to the main frame 3. The conical roller bearing 9 is an example of "bearing" in the invention and the turning axis L1 of the shaft portion 2a of the head pipe 2 is an example of "axis" in the invention. The conical roller bearing 9 is arranged in a manner to have its central axis made substantially the same as the turning axis L1, which extends longitudinally of the shaft portion 2a of the head pipe 2. An extension of the longitudinally extending turning axis L1 is formed in a manner to extend rearwardly downward (rearward and obliquely downward) as shown in Fig. 1 and to pass through the vicinity of a contact point of a rear wheel 10 and the ground 100. In a riderless state, a centre G of gravity (see Fig. 1) is arranged above the extension of the turning axis L1.

As shown in Fig. 2, a thrust washer 11 and a rubber dust seal 12a are arranged between the head pipe 2 and a front portion of the main frame 3. A rubber dust seal 12b is arranged rearwardly of the inner peripheral surface of the shaft insertion hole 3a of the main frame 3. The rubber dust seals 12a, 12b function to inhibit foreign matters such as dirt from entering into the thrust washer 11 and the conical roller bearing 9.

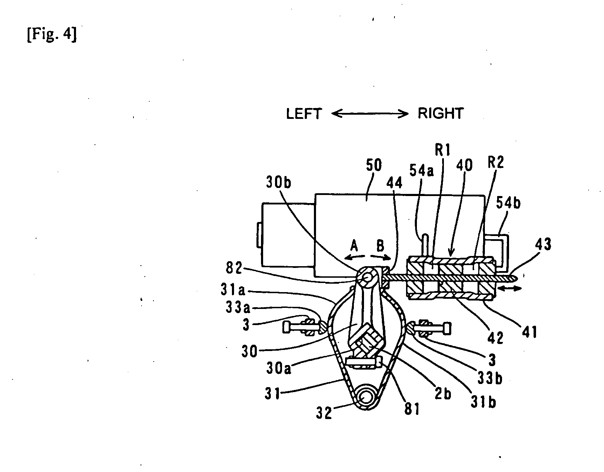

According to the first embodiment, as shown in Figs. 2 and 4, a projection 2b having a rectangular-shaped cross section (see Fig. 4) is formed integrally with a rear end of the shaft portion 2a of the head pipe 2. A turning member 30 having a drive transmitting function is fixed to the projection 2b by a bolt 81. The turning member 30 includes an engagement portion 30a having a rectangular-shaped hole for receiving and engaging the projection 2b of the shaft portion 2a, and a turning tip end 30b provided separated from the engagement portion 30a by a predetermined spacing as shown in Fig. 4. Mounted to the main frame 3 as shown in Figs. 2 and 4 is a leaf spring 31 arranged in a manner to receive the turning member 30 from both sides thereof through a support member 32. The leaf spring 31 comprises, as shown in Fig. 4, a spring portion 31a, which abuts against a left side of the turning member 30 as viewed from rearwardly of a vehicle body, and a spring portion 31b, which abuts against a right side of the turning member 30. Mounted to the main frame 3 are a pair of position restricting members 33a, 33b, which abut against the spring portions 31a, 31b of the leaf spring 31 and restrict turning of the turning member 30 in a direction of an arrow A and in a direction of an arrow B, and which face each other. The leaf spring 31 and the pair of position restricting members 33a, 33b serve to maintain a neutral position of the turning member 30 in a turning direction (in the direction of the arrow A and in the direction of the arrow B). That is, in the case where the turning member 30 turns in the direction of the arrow A or in the direction of the arrow B away from the neutral position, the spring portion 31a or 31b of the leaf spring acts to return the turning member 30 to the neutral position by applying a restoring force to the turning member 30.

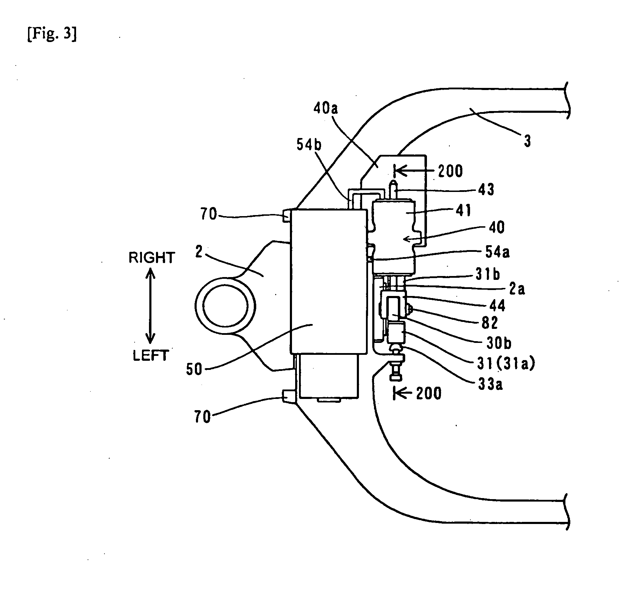

According to the first embodiment, mounted to an upper portion of the main frame 3 is a hydraulic cylinder 40 to act as an actuator, to turn the head pipe 2 relative to the main frame 3 through a cylinder bracket 40a (see Fig. 3), as shown in Figs. 2 and 3. The hydraulic cylinder 40 is an example of "cylinder" and "centre of gravity moving means" in the invention. The hydraulic cylinder 40 comprises, as shown in Figs. 3 and 4, a tube 41, a piston 42 (see Fig. 4) arranged inside the tube 41, a piston rod 43 fixed to the piston 42, and a connection member 44 mounted to an end of the piston rod 43. The tube 41 is fixed to the cylinder bracket 40a. The interior of the tube 41 is divided into two oil filled regions R1, R2 by the piston 42 as shown in Fig. 4. The piston rod 43 is arranged to extend through the tube 41. As shown in Fig. 3, the connection member 44 is connected to the turning tip end 30b of the turning member 30 by a bolt 82. According to the first embodiment, the tube 41 of the hydraulic cylinder 40 is connected to a side of the main frame 3, and the piston 42 and the piston rod 43 of the hydraulic cylinder 40 are connected to a side of the the head pipe 2 through the turning member 30. Thereby, according to the first embodiment, the linear motion of the piston 42 of the hydraulic cylinder 40 is converted into rotary motion of the turning member 30 to be transmitted to the shaft portion 2a of the head pipe 2, so that it becomes possible to turn the head pipe 2 relative to the main frame 3 about the turning axis L1 (see Fig. 2) of the conical roller bearing 9.

In the first embodiment, as shown in Figs. 1 and 2, a pump part 50 is arranged forwardly and obliquely upwardly of the hydraulic cylinder 40 to supply oil to hydraulic cylinder 40. The pump part 50 comprises, as shown in Fig. 5, an oil pump 52, to which an accumulator 51 is connected, and a switching valve 53. Also, a lane line follow-up control unit 60 is electrically connected to the pump part 50. Specifically, the lane line follow-up control unit 60 comprises a control device 61, a speed sensor 62, an inclination sensor 63, an earth magnetism sensor 64, and a vehicle-mounted camera 65. The control device 61, the speed sensor 62, the inclination sensor 63, and the earth magnetism sensor 64 in the lane line follow-up control unit 60 are mounted on a control board (not shown) arranged in the vicinity of a seat 26. The vehicle-mounted camera 65 is arranged on a front portion of the motorcycle 1. The control device 61 is an example of "control means" and "lane line detection means" in the invention, the speed sensor 62 is an example of "speed detection means" in the invention, the inclination sensor 63 and the earth magnetism sensor 64 are examples of "inclination detection means" in the invention, and the vehicle-mounted camera 65 is an example of "camera" and "lane line detection means" in the invention. The accumulator 51 is constructed to be able to absorb pressure fluctuations generated by the oil pump 52. Also, the accumulator 51 functions to give precompression to the hydraulic cylinder 40 to thereby enhance the hydraulic cylinder 40 in reaction velocity and to stabilize the same. The accumulator 51 operates at all times when the starter switch (not shown) of the motorcycle 1 is switched to ON, i.e. up until the engine 19 of the motorcycle 1 is stopped.

The control device 61 is programmed so as to enable exercising lane the line follow-up control of the motorcycle 1. That is, the control device 61 is constructed to detect (calculate) a lane line (a travelling direction of the motorcycle 1) on the basis of a signal output from the vehicle-mounted camera 65 and to predict a running direction of the motorcycle 1 on the basis of signals output from the speed sensor 62, the inclination sensor 63, and the earth magnetism sensor 64 to control the accumulator 51, the oil pump 52, and the switching valve 53 so as to inhibit the predicted running direction of the motorcycle 1 from deviating from the lane line (the travelling direction of the motorcycle 1) detected by the vehicle-mounted camera 65. The speed sensor 62 functions to detect the speed of the motorcycle 1 and to output the detected value to the control device 61 as a signal of current value and voltage value. The inclination sensor 63 functions to detect a speed of inclination (angular velocity) and to output the detected value to the control device 61 as a signal of current value and voltage value. It is possible to use a gyro sensor such as roll sensors, yaw rate sensors, etc. for the inclination sensor 63. The earth magnetism sensor 64 functions to detect an angle of inclination of the motorcycle 1 relative to a vertical direction (a direction, in which the gravitational force acts) and to output the detected value to the control device 61 as a signal of current value and voltage value. The vehicle-mounted camera 65 functions to detect a white line drawn on a road surface and to output the detected value to the control device 61 as a signal of current value and voltage value. The hydraulic cylinder 40 and the pump part 50 are connected to each other by means of two hydraulic pipes 54a, 54b. The two hydraulic pipes 54a, 54b, respectively, are connected to the two regions R1, R2 in the tube 41 which are divided by the piston 42, as shown in Fig. 4.

In the first embodiment, a pair of stops 70 are provided forwardly of the main frame 3 as shown in Fig. 3 to prevent the head pipe 2 from turning excessively relative to the main frame 3. The stops 70 are an example of "restriction member" in the invention. The pair of stops 70 are formed to abut against the head pipe 2 when the head pipe turns several degrees clockwise or counterclockwise about the turning axis L1 relative to the main frame 3.

A handlebar 13 is mounted to the head pipe 2 for use in turning, as shown in Fig. 1. Provided forwardly of the head pipe 2 are a headlight 14, which illuminates the front, and a front cowl 15, which covers the front of the head pipe 2. Also, a light stay 16 is arranged between the headlight 14 and the head pipe 2 to support the headlight 14. Instruments and a rear view mirror 17 are mounted above the light stay 16. A lower portion of the front cowl 15 is extended rearwardly downward and fixed to a vehicle body cover (not shown) of the main frame 3 by a screw 18.

The engine 19 is mounted below the main frame 3 as shown in Fig. 1. An exhaust pipe 20 is mounted to the engine 19. The exhaust pipe 20 is curved to the right in the running direction to be directed rearwardly downward, and is connected to a muffler 21. A radiator 22 is provided forwardly upwardly of the engine 19 to cool the engine 19. A pivot shaft 23 is provided at a rear end of the main frame 3. The pivot shaft 23 pivotally supports a front end of a rear arm 24 to enable the same to swing vertically. The rear wheel 10 is mounted rotatably to a rear end of the rear arm 24. That is, the rear wheel 10 is mounted to the main frame 3 through the rear arm 24. The rear wheel 10 includes a circular tyre, the lower surface of which has an arcuate profile when viewed in the travelling direction, so as to enable the vehicle to lean relative to a vertical direction at the time of turning. Like the rear wheel 10, the front wheel 7 includes a circular tyre. A fuel tank 25 is arranged above the main frame 3. The seat 26 is arranged rearwardly of the fuel tank 25.

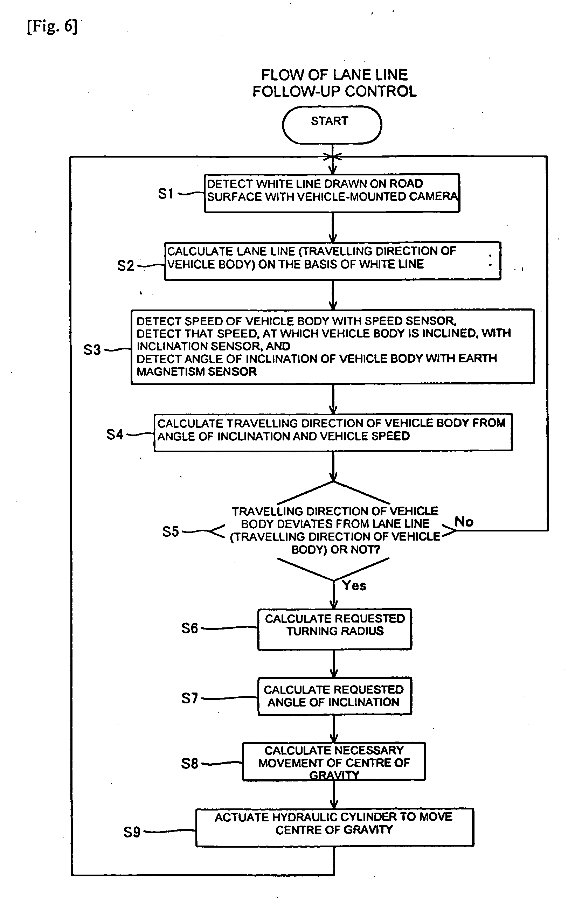

Fig. 6 is a flowchart that illustrates a lane line follow-up control method of the motorcycle according to the first embodiment of the invention. The lane line follow-up control method of the motorcycle 1 according to the first embodiment of the invention will be described below with reference to Fig. 6.

First, a driver switches a starter switch (not shown) on the motorcycle 1 to an ON state whereby a white line present on a road surface is detected by the vehicle-mounted camera 65 in STEP S1 shown in Fig. 6 and the results of detection are output to the control device 61. In STEP S2, the control device 61 calculates a lane line (the travelling direction of the motorcycle 1) on the basis of the white line detected by the vehicle-mounted camera 65 in STEP S1.

Subsequently, in STEP S3, the speed of the motorcycle 1 is detected by the speed sensor 62. The speed (angular velocity) at which the motorcycle 1 is inclined is detected by the inclination sensor 63. The angle of inclination of the motorcycle 1 is detected by the earth magnetism sensor 64. Results of these detections are output to the control device 61. In STEP S4, the control device 61 calculates a travelling direction of the motorcycle 1 on the basis of the speed of the motorcycle 1 detected by the speed sensor 62, the speed (angular velocity) at which the motorcycle 1 is inclined detected by the inclination sensor 63, and an angle of inclination of the motorcycle 1 detected by the earth magnetism sensor 64 in STEP S3.

Subsequently, in STEP S5, the control device 61 judges whether the travelling direction of the motorcycle 1 calculated in STEP S4 deviates from the lane line (the travelling direction of the motorcycle 1) calculated in STEP S2. In the case where it is judged that the travelling direction of the motorcycle 1 calculated in STEP S4 does not deviate from the lane line (the travelling direction of the motorcycle 1) calculated in STEP S2, the procedure returns to STEP S 1. On the other hand, in the case where it is judged that the travelling direction of the motorcycle 1 calculated in STEP S4 deviates from the travelling direction of the motorcycle 1 calculated in STEP S2, the procedure proceeds to STEP S6.

Subsequently, in STEP S6, the control device 61 calculates a requested turning radius, which is required for causing the motorcycle 1 to keep the lane line (the travelling direction of the motorcycle 1) calculated in STEP S2, from the speed of the motorcycle 1, the speed (angular velocity) at which the motorcycle is inclined, and the angle of inclination of the motorcycle 1, detected in STEP S3. In STEP S7, the control device 61 calculates a requested angle of inclination, which is required for causing the motorcycle 1 to turn at the requested turning radius calculated in STEP S6.

In STEP S8, the control device 61 calculates the movement of the centre of gravity which would be required to cause the motorcycle 1 to be inclined at the requested angle of inclination calculated in STEP S7. In STEP S9, the control device 61 actuates the hydraulic cylinder 40 to move the centre G of gravity by the amount calculated in STEP S7. Specifically, the control device 61 calculates the amount (stroke) of actuation of the piston 42 of the hydraulic cylinder 40 which would be required for moving the centre G of gravity to keep the lane line (the travelling direction of the motorcycle 1), and an appropriate signal is transmitted to the switching valve 53 provided on a hydraulic circuit from the control device 61. Thereby, the switching valve 53 is actuated, so that a necessary quantity of an oil is supplied into the hydraulic cylinder 40 from the oil pump 52. The hydraulic cylinder 40 is actuated to turn the main frame 3 relative to the head pipe 2 whereby the centre G of gravity is moved so that the lane line (the travelling direction of the motorcycle 1) is kept. Thereby, the motorcycle 1 can keep the lane line (the travelling direction of the motorcycle 1).

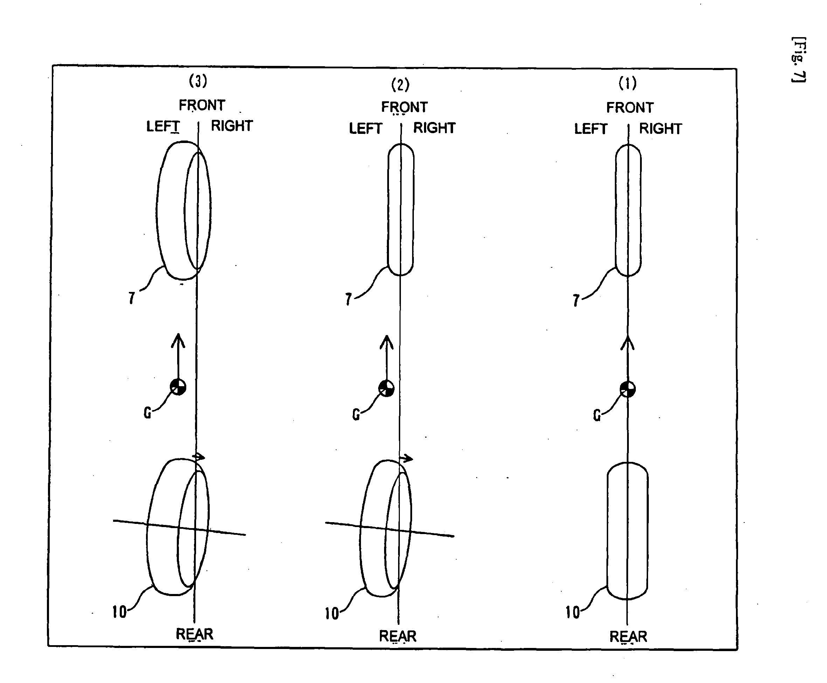

Figs. 7 to 10 are schematic views illustrating a motion of the motorcycle, according to the first embodiment, shown in Fig. 6 at the time of lane line follow-up control. A centre of gravity movement of the motorcycle, according to the first embodiment of the invention, at the time of lane line follow-up control will be described below with reference to Figs. 4, 7 to 10, and 11.

First, the motorcycle 1 travels straight as shown in (1) of Fig. 7 although the lane line (the travelling direction of the motorcycle 1) detected by the vehicle-mounted camera 65 is leftward. The control device 61 controls the oil pump 52 so that a predetermined amount of an oil is supplied to the left region R1 (see Fig. 4) in the hydraulic cylinder 40 from the oil pump 52 in the case where the motorcycle 1 is going to deviate from the lane line (the travelling direction of the motorcycle 1). Thereby, the piston 42 and the piston rod 43 of the hydraulic cylinder 40 are moved rightward and the turning member 30 turns clockwise (in the direction of the arrow B in Fig. 4) about the projection 2b of the shaft portion 2a, which engages with the engagement 30a. Thereby, the head pipe 2 turns clockwise relative to the main frame 3. Since this means that the main frame 3 turns counterclockwise about the turning axis L1 relative to the head pipe 2, the centre G of gravity is moved to the left and the motorcycle 1 twists as shown in (2) of Fig. 7 whereby a minute rightward rudder angle is given to the rear wheel 10. Since the centre G of gravity is moved to the left, the motorcycle 1 is inclined to the left as shown in (3) of Fig. 7. Thereby, since a camber thrust is generated and a minute rudder angle is given to the rear wheel 10, the motorcycle 1 turns leftward.

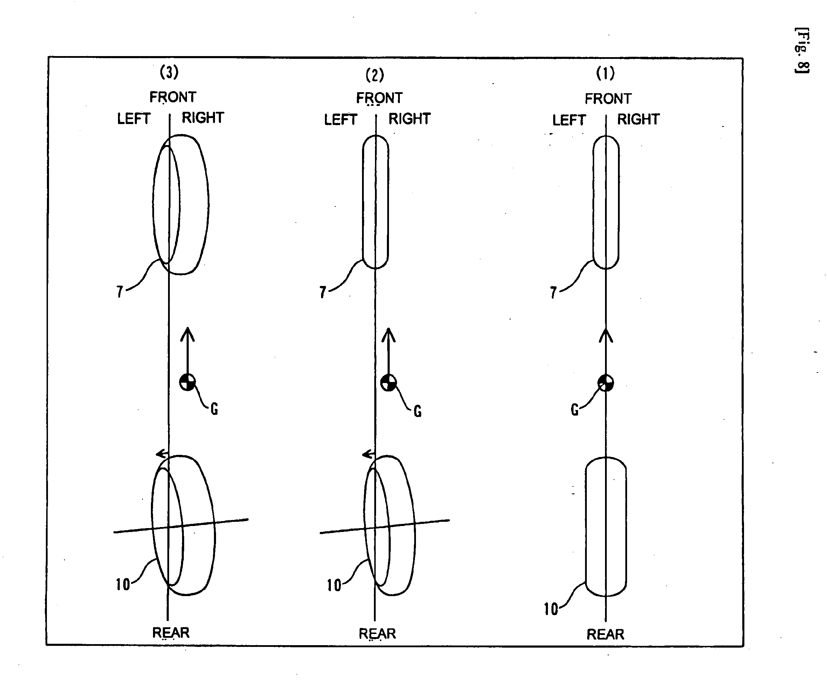

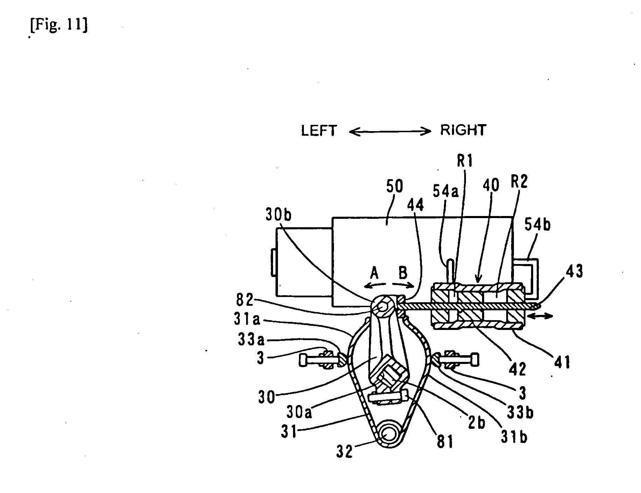

Suppose the motorcycle 1 travels straight as shown in (1) of Fig. 8 although the lane line (the travelling direction of the motorcycle 1) detected by the vehicle-mounted camera 65 is rightward. In this case the control device 61 controls the oil pump 52 so that a predetermined amount of an oil is supplied to the right region R2 (see Fig. 11) in the hydraulic cylinder 40 from the oil pump 52 in the case where the motorcycle 1 is going to deviate from the lane line (the travelling direction of the motorcycle 1). Thereby, the piston 42 and the piston rod 43 of the hydraulic cylinder 40 are moved leftward and the turning member 30 turns counterclockwise (in the direction of the arrow A in Fig. 11) about the projection 2b of the shaft portion 2a, which engages with the engagement 30a. Thereby, the head pipe 2 turns counterclockwise relative to the main frame 3. Since this means that the main frame 3 turns clockwise about the turning axis L1 relative to the head pipe 2, the centre G of gravity is moved to the right and the motorcycle 1 twists as shown in (2) of Fig. 8 whereby a minute leftward rudder angle is given to the rear wheel 10. Since the centre G of gravity is moved to the right, the motorcycle 1 is inclined to the right as shown in (3) of Fig. 8. Thereby, since a camber thrust is generated and a minute rudder angle is given to the rear wheel 10, the motorcycle 1 turns rightward.

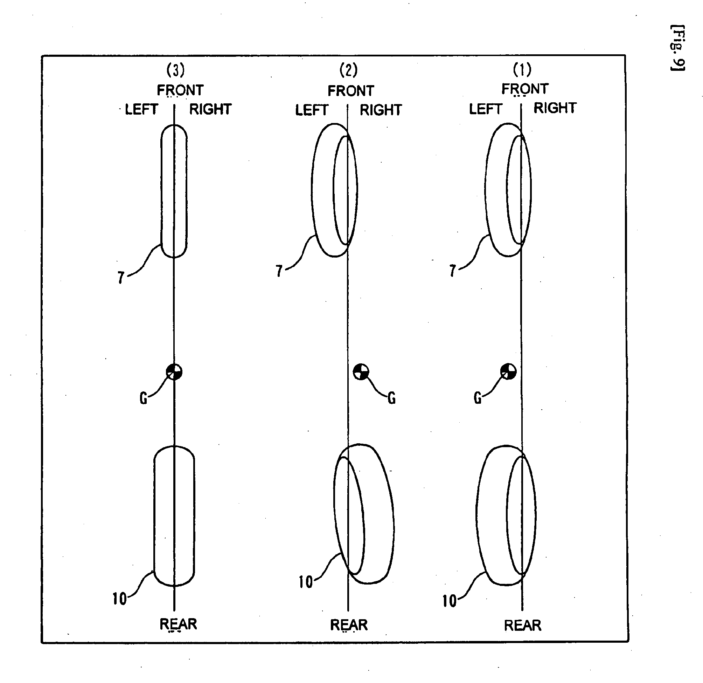

In another situation the motorcycle 1 turns leftward as shown in (1) of Fig. 9 although the lane line (the travelling direction of the motorcycle 1) detected by the vehicle-mounted camera 65 is straight. In this situation the control device 61 controls the oil pump 52 so that a predetermined amount of an oil is supplied to the right region R2 (see Fig. 11) in the hydraulic cylinder 40 from the oil pump 52 in the case where the motorcycle 1 is going to deviate from the lane line (the travelling direction of the motorcycle 1). Thereby, the piston 42 and the piston rod 43 of the hydraulic cylinder 40 are moved leftward and the turning member 30 turns counterclockwise (in the direction of the arrow A in Fig. 11) about the projection 2b of the shaft portion 2a, which engages with the engagement 30a. Thereby, the head pipe 2 turns counterclockwise relative to the main frame 3. Since this means that the main frame 3 turns clockwise about the turning axis L1 relative to the head pipe 2, the centre G of gravity is moved to the right from the left as shown in (2) of Fig. 9. As the centre G of gravity is moved to the right, the front wheel 7 is moved to the right. At this time, the control device 61 causes the oil pump 52 to supply a predetermined amount of an oil to the left region R1 in the hydraulic cylinder 40 whereby the piston 42 and the piston rod 43 are moved rightward from a state shown in Fig. 11 and the turning member 30 is caused to turn clockwise (in the direction of the arrow B) about the projection 2b of the shaft portion 2a, which engages with the engagement 30a. Thereby, the centre G of gravity shown in (2) of Fig. 9 is moved to the left and the rear wheel 10 is moved to the left. Consequently, a side of the front wheel 7 and a side of the rear wheel 10 are arranged in parallel to each other as shown in (3) of Fig. 9, so that the vehicle body is righted and the motorcycle 1 travels straight.

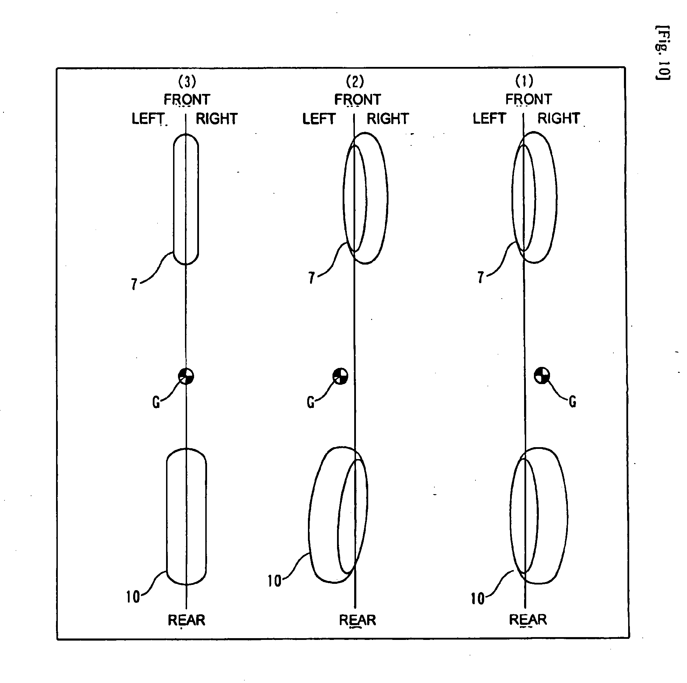

In a yet further situation the motorcycle 1 turns rightward as shown in (1) of Fig. 10 although the lane line (the travelling direction of the motorcycle 1) detected by the vehicle-mounted camera 65 is straight. In this situation the control device 61 controls the oil pump 52 so that a predetermined amount of an oil is supplied to the left region R1 (see Fig. 4) in the hydraulic cylinder 40 from the oil pump 52 in the case where the motorcycle 1 is going to deviate from the lane line (the travelling direction of the motorcycle 1). Thereby, the piston 42 and the piston rod 43 of the hydraulic cylinder 40 are moved rightward and the turning member 30 turns clockwise (in the direction of the arrow B in Fig. 4) about the projection 2b of the shaft portion 2a, which engages with the engagement 30a. Thereby, the head pipe 2 turns clockwise relative to the main frame 3. Since this means that the main frame 3 turns counterclockwise about the turning axis L1 relative to the head pipe 2, the centre G of gravity is moved to the left from the right as shown in (2) of Fig. 10. As the centre G of gravity is moved to the left, the front wheel 7 is moved to the left. At this time, the control device 61 causes the oil pump 52 to supply a predetermined amount of an oil to the right region R2 in the hydraulic cylinder 40 whereby the piston 42 and the piston rod 43 are moved leftward and the turning member 30 is caused to turn counterclockwise (in the direction of the arrow A) about the projection 2b of the shaft portion 2a, which engages with the engagement 30a. Thereby, the centre G of gravity shown in (2) of Fig. 10 is moved to the right and the rear wheel 10 is moved to the right. Consequently, the side of the front wheel 7 and the side of the rear wheel 10 are arranged in parallel to each other as shown in (3) of Fig. 10, so that the vehicle body is righted and the motorcycle 1 travels straight. In this manner, when the motorcycle 1 is going to deviate from the lane line (the travelling direction of the motorcycle 1) detected by the vehicle-mounted camera 65, lane line follow-up control of the motorcycle 1 is exercised.

As described above, the first embodiment is constructed to comprise the hydraulic cylinder 40, which moves the centre G of gravity, and the vehicle-mounted camera 65, which detects a travelling direction of the motorcycle 1. In the first embodiment the hydraulic cylinder 40 is used to move the centre G of gravity to keep the lane line detected by the vehicle-mounted camera 65. In this way the hydraulic cylinder 40 can positively move the centre G of gravity laterally (in a vehicle width direction) irrespective of a driver's will, so that it is possible to incline the vehicle body laterally (in the vehicle width direction), or to right the vehicle body. Thereby, in the case where the motorcycle 1 is going to deviate from the lane line (the travelling direction of the motorcycle 1) detected by the vehicle-mounted camera 65, the vehicle body is inclined laterally (in the vehicle width direction) to thereby enable turning of the motorcycle 1 and the vehicle body is righted to thereby enable the motorcycle 1 to travel straight, so that the motorcycle 1 can follow the lane line (the travelling direction of the motorcycle 1) detected by the vehicle-mounted camera 65. Consequently, the motorcycle 1 can keep the lane line (the travelling direction of the motorcycle 1) detected by the vehicle-mounted camera 65 without steering control of the front wheel 7. Also, in the case where the motorcycle 1 is going to deviate from the lane line (the travelling direction of the motorcycle 1) detected by the vehicle-mounted camera 65, it is possible to incline the vehicle body laterally (in the vehicle width direction), or to right the vehicle body, so that it is possible to inform a driver in a manner of bodily sensation of the fact that the motorcycle 1 is going to deviate from the lane line (the travelling direction of the motorcycle 1) detected by the vehicle-mounted camera 65.

In the first embodiment, the inclination sensor 63, which detects that speed at which the vehicle body is inclined, the earth magnetism sensor 64, which detects an angle of inclination of the vehicle body, the speed sensor 62, which detects the speed of the vehicle body, provide information to the control device 61. The control device controls the hydraulic cylinder 40 on the basis of results of detection by the inclination sensor 63, the earth magnetism sensor 64, the speed sensor 62, and the vehicle-mounted camera 65. In this way it is possible to predict a running direction of the motorcycle 1 on the basis of results of detection by the inclination sensor 63, the earth magnetism sensor 64, and the speed sensor 62, so that the control device 61 can control the hydraulic cylinder 40 on the basis of results of the predicted running direction of the motorcycle 1 and the lane line (the travelling direction of the motorcycle 1) detected by the vehicle-mounted camera 65. Thereby, it is possible to appropriately move the centre G of gravity according to the predicted running direction of the motorcycle 1 and the lane line (the travelling direction of the motorcycle 1) detected by the vehicle-mounted camera 65.

In the first embodiment, the control device 61 is constructed in a manner to predict a running direction of the motorcycle 1 on the basis of results of detection by the inclination sensor 63, the earth magnetism sensor 64, and the speed sensor 62 and to control the hydraulic cylinder 40 so as to inhibit the predicted running direction of the motorcycle 1 from deviating from the travelling direction of the motorcycle 1 detected by the vehicle-mounted camera 65. In the case where the motorcycle 1 is going to deviate from the lane line (the travelling direction of the motorcycle 1) detected by the vehicle-mounted camera 65, the hydraulic cylinder 40 controlled by the control device 61 can move the centre G of gravity so as to inhibit the predicted running direction of the motorcycle 1 from deviating from the lane line (the travelling direction of the motorcycle 1) detected by the vehicle-mounted camera 65, so that it is possible to readily incline the vehicle body or to right the vehicle body so that the motorcycle 1 keeps the lane line (the travelling direction of the motorcycle 1).

In the first embodiment, the main frame 3 is caused to turn relative to the head pipe 2 whereby a rudder angle in an opposite direction to that direction, in which the centre G of gravity is moved, is given to the rear wheel 10, which is supported by the main frame 3. In this way it is possible to decrease the turning radius at the time of turning and to improve the ability of the vehicle body to turn.

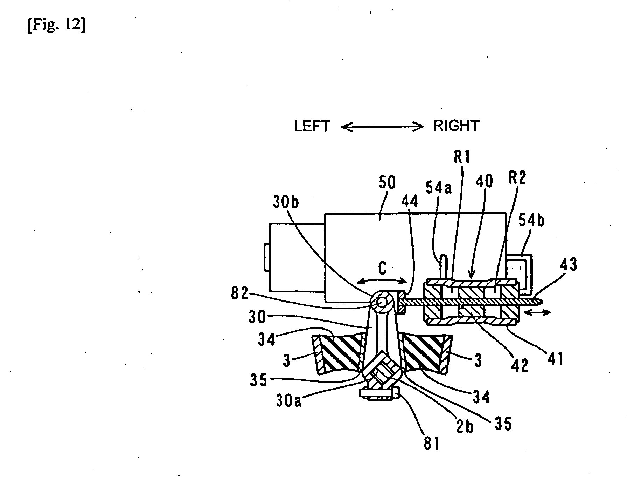

Fig. 12 is a cross sectional view showing a periphery of a turning member according to a first modification of the first embodiment of the invention. Referring to Figs. 4 and 12, elastic members 34 made of rubber or the like are used in the first modification of the first embodiment to keep the neutral position of the turning member 30 as shown in Fig. 12. This is different to the first embodiment, in which the leaf spring 31 shown in Fig. 4 was used to keep the neutral position of the turning member 30. That is, the pair of elastic members 34 made of rubber or the like are mounted to the main frame 3. Abutment members 35, which abut against sides of the turning member 30, are mounted to the pair of elastic members 34, respectively. According to the first modification of the first embodiment, the pair of elastic members 34, respectively, to which the abutment members 35 are mounted, are arranged laterally of the turning member 30 whereby it is possible to readily keep a neutral position of the turning member 30 in a turning direction (in a C direction in Fig. 12).

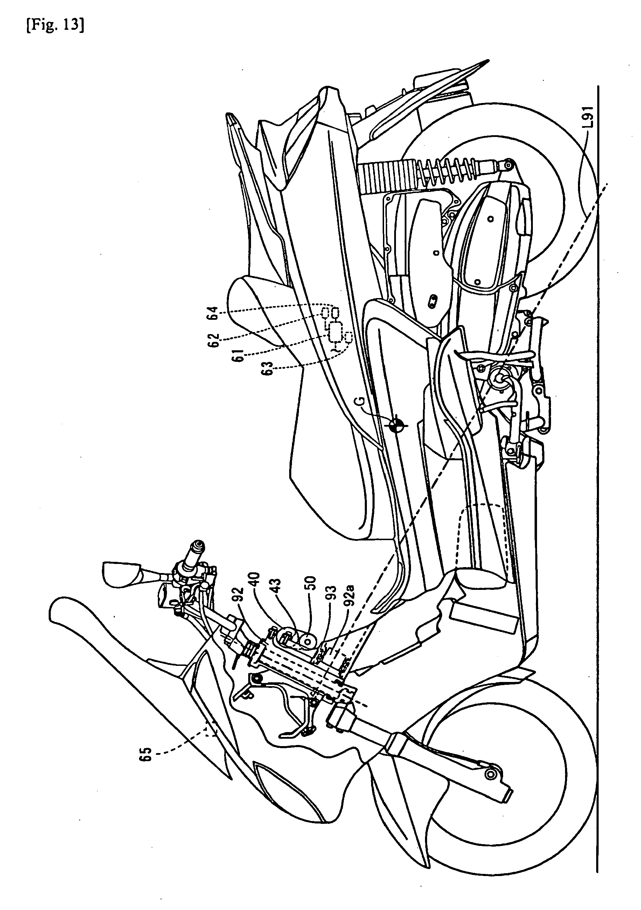

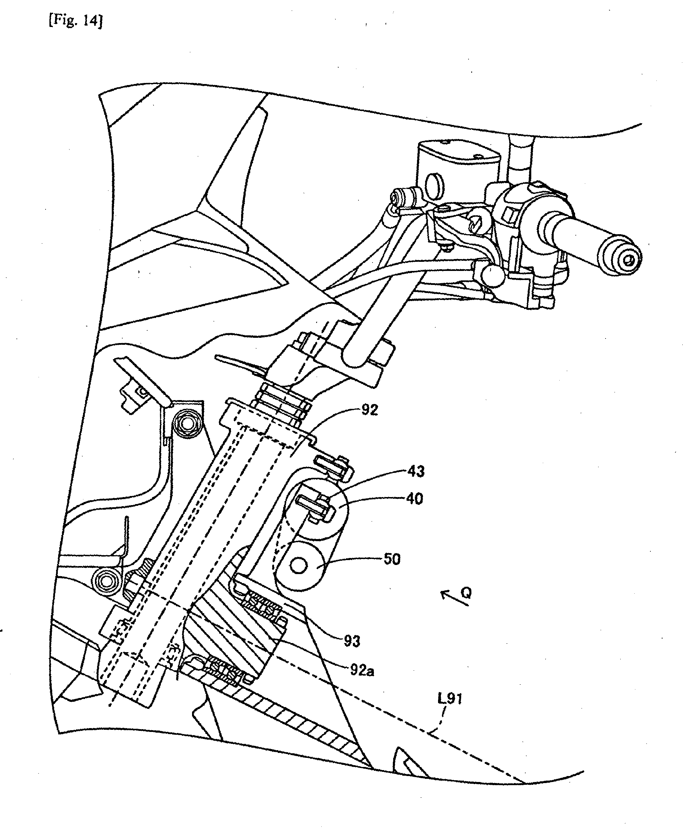

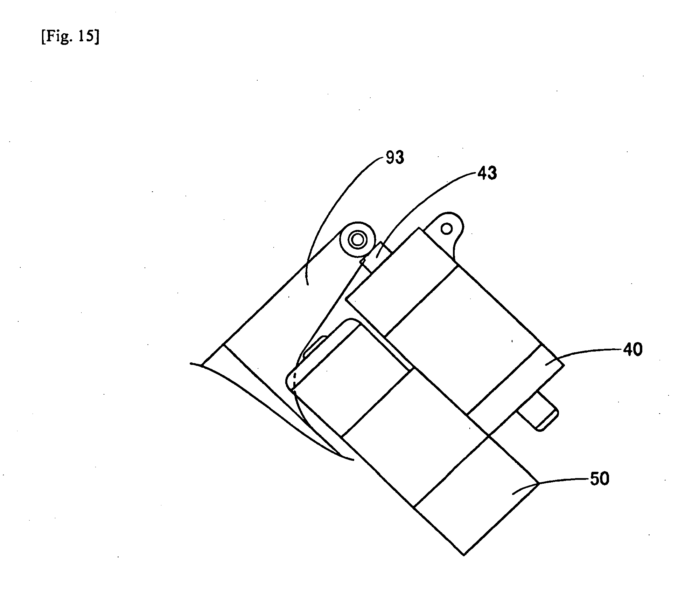

Figs. 13 to 15 are views showing the construction of a motorcycle according to a second modification of the first embodiment of the invention. Referring to Figs. 1 and 13 to 15, a hydraulic cylinder 40 in the second modification of the first embodiment is mounted to a head pipe 92 as shown in Figs. 13 to 15, unlike the first embodiment, in which the hydraulic cylinder 40 shown in Fig. 1 is mounted to the upper portion of the main frame 3. The piston rod 43 of the hydraulic cylinder 40 is mounted to a main frame 93. According to the second modification of the first embodiment, the hydraulic cylinder 40 and the pump part 50 are arranged along that portion of the head pipe 92, which extends perpendicular to a central line L91 of a shaft portion 92a, whereby it is possible to save space occupied by the hydraulic cylinder 40 and the pump part 50.

### Second embodiment

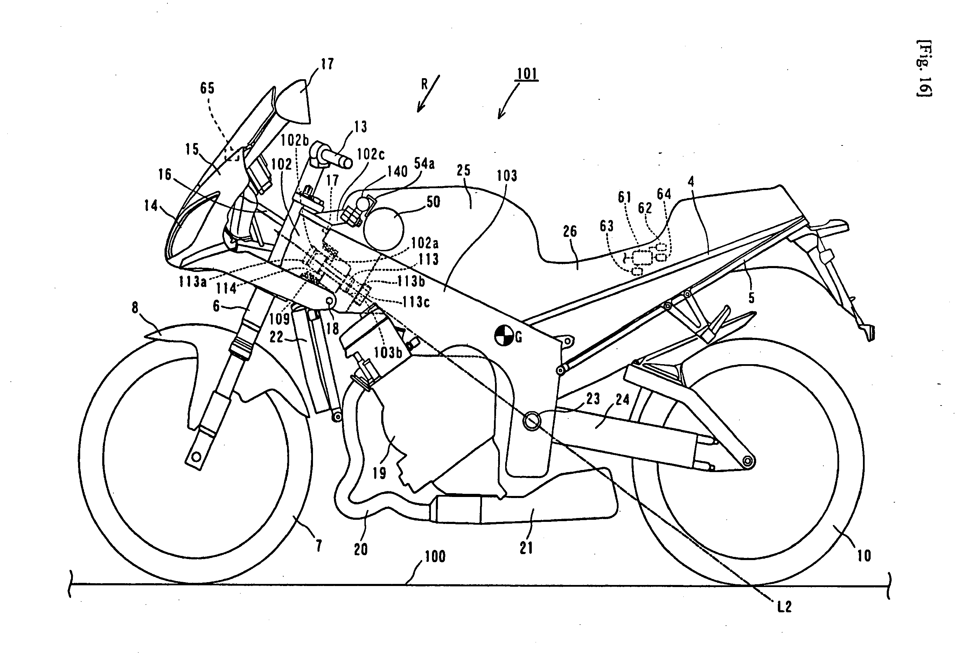

Figs. 16 to 18 are views showing the construction of a motorcycle according to a second embodiment of the invention. Referring to Figs. 16 to 18, an explanation will be given to the construction of a motorcycle 101 according to the second embodiment, in which the head pipe 102 and the main frame 103, which constitute a vehicle body frame, are connected to each other with a torsion spring 113 therebetween. Apart from the connection of the head pipe 102 and the main frame 103, the construction of the motorcycle 101 according to the second embodiment and the method of controlling operation of the motorcycle 101 are substantially the same as those for the motorcycle 1 according to the first embodiment. In the second embodiment the head pipe 102 is an example of "front frame" in the invention and the main frame 103 is an example of "rear frame" in the invention.

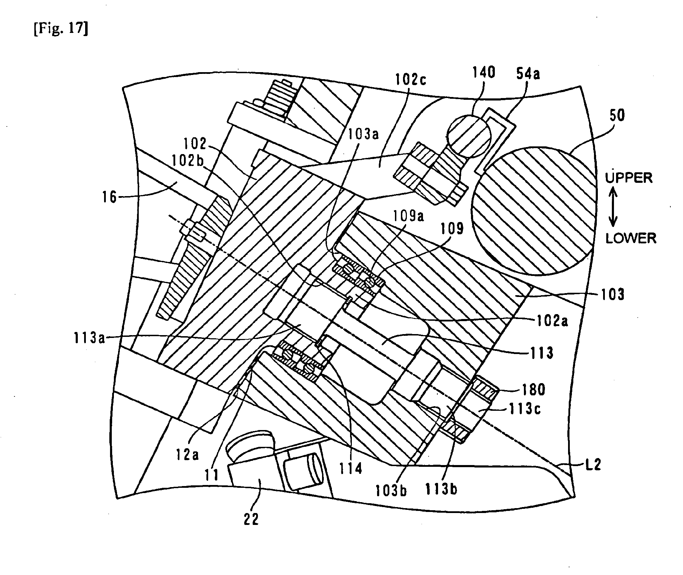

According to the second embodiment, a cylindrical-shaped shaft portion 102a projecting rearwardly downward is formed integrally on a rear portion of the head pipe 102 as shown in Fig. 17. In addition, the shaft portion 102a is an example of "first bearing mount" in the invention. The main frame 103 is provided with a concave-shaped shaft insertion portion 103a, into which the shaft portion 102a of the head pipe 102 is inserted. The shaft insertion portion 103a is an example of "second bearing mount" in the invention. An angular bearing 109 having spherical-shaped balls 109a is arranged between an outer peripheral surface of the shaft portion 102a of the head pipe 102 and an inner peripheral surface of the shaft insertion portion 103a of the main frame 103. Thereby, the head pipe 102 can turn relative to the main frame 103 about an axis of twist L2 extending longitudinally of the shaft portion 102a. The axis of twist L2 of the shaft portion 102a of the head pipe 102 is an example of "axis" in the invention. The angular bearing 109 is an example of "bearing" in the invention. The angular bearing 109 is arranged so that its central axis becomes substantially the same as an axis of twist L2 extending longitudinally of the shaft portion 102a of the head pipe 102. An extension of the axis of twist L2 extending longitudinally is formed to extend rearwardly downward (rearward and obliquely downward) and to pass through the vicinity of a contact point between the rear wheel 10 and the ground 100 as shown in Fig. 16. In a riderless state, the centre G of gravity is arranged above the extension of the axis of twist L2.

In the second embodiment, the head pipe 102 and the main frame 103 are connected to each other with the torsion spring 113, as shown in Fig. 17. In a mount construction for the torsion spring 113, a splined hole 102b having grooves is formed on the shaft portion 102a of the head pipe 102. A splined shaft portion 113a on a front portion of the torsion spring 113 is inserted into the splined hole 102b. The splined shaft portion 113a of the torsion spring 113 is splined corresponding to the grooves of the splined hole 102b. Thereby, the front portion of the torsion spring 113 is fixed so as to turn integrally with the shaft portion 102a of the head pipe 102. Also, a C-ring 114 is fitted into a rear side portion of the splined hole 102b of the head pipe 102 to prevent the torsion spring 113 from coming off rearward. Also, a splined hole 103b having grooves is formed on that portion of the main frame 103, to which the torsion spring 113 is mounted. The splined shaft portion 113b of the rear portion of the torsion spring 113 is inserted into the splined hole 103b. The splined shaft portion 113b of the torsion spring 113 is splined corresponding to the grooves of the splined hole 103b. Thereby, the rear portion of the torsion spring 113 is fixed so as to turn integrally with the main frame 103. A threaded portion 113c is formed on a rear end of the torsion spring 113. The threaded portion 113c of the torsion spring 113 is fixed to an inside, front surface of the main frame 103 by a nut 180. The torsion spring 113 is put in a non-loaded state (a state, in which a twist angle is 0 degree) in the case where the side of the front wheel 7 and the side of the rear wheel 10 are arranged in parallel to each other. The torsion spring is put in a loaded state in the case where the head pipe 102 is turned relative to the main frame 103 and the side of the front wheel 7 and the side of the rear wheel 10 are not arranged in parallel to each other. In addition, torsional rigidity can be modified by exchanging the torsion spring 113 for another.

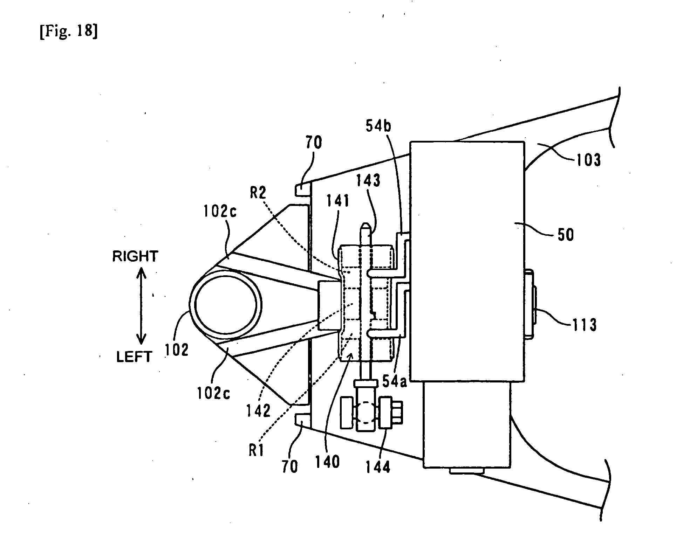

In the second embodiment, a cylinder support 102c is provided integrally on an upper portion of the head pipe 102 to extend rearward and obliquely upward as shown in Figs. 17 and 18. A hydraulic cylinder 140 is mounted as an actuator, which turns the head pipe 102 relative to the main frame 103, to an upper portion of the cylinder support 102c. The hydraulic cylinder 140 is an example of "cylinder" and "centre of gravity moving means" in the invention. The hydraulic cylinder 140 comprises, as shown in Fig. 18, a tube 141, a piston 142 arranged inside the tube 141, a piston rod 143 fixed to the piston 142, and a piston rod support 144, which supports an end of the piston rod 143. The tube 141 is fixed to the cylinder support 102c. The interior of the tube 141 is divided into two oil-filled regions R1, R2 by the piston 142. The piston rod 143 is arranged to extend through the tube 141. The piston rod support 144 is fixed to an upper surface of the main frame 103. That is, according to the second embodiment, the tube 141 of the hydraulic cylinder 140 is connected to a side of the head pipe 102, and the piston 142 and the piston rod 143 of the hydraulic cylinder 140 are connected to a side of the main frame 103 unlike the first embodiment. The piston rod support 144 is ball-joined to the end of the piston rod 143. Thereby, the piston rod support is provided in order to make the piston rod 143, which is inserted into the tube 141, movable relative to the piston rod support 144 in a left and right direction (see Fig. 18) in the case where the tube 141 turns arcuately about the axis of twist L2 (see Fig. 17) of the angular bearing 109. Thereby, since the arcuate turning movement is converted into linear movement, the piston rod 143 and the piston 142 can move smoothly in the tube 141.

In the second embodiment, a pump part 50 is arranged rearwardly and obliquely downwardly of the hydraulic cylinder 140 to supply oil to the hydraulic cylinder 140. Also, the hydraulic cylinder 140 and the pump part 50 are connected to each other by two hydraulic pipes 54a, 54b.

In the second embodiment, the head pipe 102 and the main frame 103 are connected to each other with the torsion spring 113 therebetween as described above. As a result the head pipe 102 and the main frame 103 can be put in a state of not turning relative to each other under load (twist force) of the torsion spring 113 in the case where the lane line follow-up control of the motorcycle 101 cannot be exercised due to failure of the control device 61 of the lane line follow-up control unit 60. In this condition the side of the front wheel 7 and the side of the rear wheel 10 can be arranged to be parallel to each other. As a result, running of the motorcycle 101 can be continued naturally in the case where the control device 61 of the lane line follow-up control unit 60 malfunctions.

Other effects of the second embodiment are the same as those in the first embodiment described above.

### Third embodiment

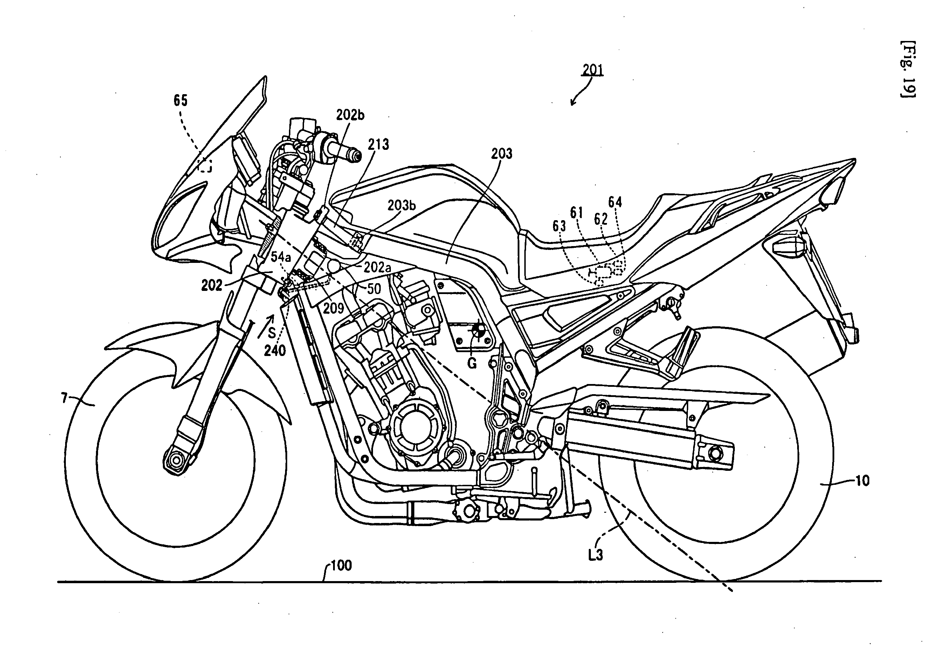

Figs. 19 to 24 are views showing the construction of a motorcycle according to a third embodiment of the invention. Referring to Figs. 19 to 24, an explanation will be given to the construction of a motorcycle 201 according to the third embodiment, in the case where a head pipe 202 and a main frame 203, which constitute a vehicle body frame, are connected to each other with a spring member 213 therebetween. Apart from the connection of the head pipe 202 and the main frame 203, the construction of the motorcycle 201 according to the third embodiment, and the method of controlling an operation of the motorcycle 201, are substantially the same as those for the motorcycle 1 according to the first embodiment. The head pipe 202 is an example of "front frame" in the invention and the main frame 203 is an example of "rear frame" in the invention.

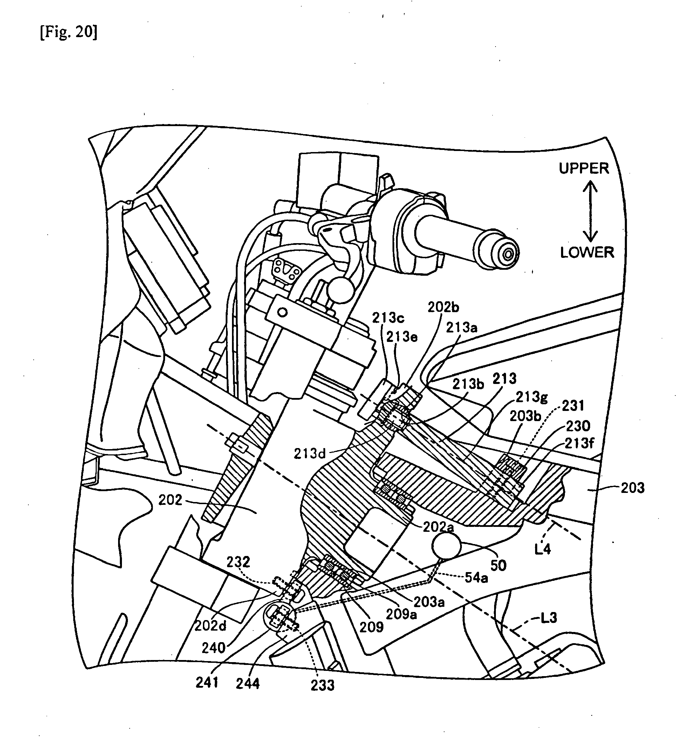

In the third embodiment, a cylindrical-shaped shaft portion 202a projecting rearwardly downward is formed integrally on a rear portion of the head pipe 202 as shown in Fig. 20. The shaft portion 202a is an example of "first bearing mount" in the invention. The main frame 203 is provided with a concave-shaped shaft insertion portion 203a, into which the shaft portion 202a of the head pipe 202 is inserted. The shaft insertion portion 203a is an example of "second bearing mount" in the invention. An angular bearing 209 having spherical-shaped balls 209a is arranged between an outer peripheral surface of the shaft portion 202a of the head pipe 202 and an inner peripheral surface of the shaft insertion portion 203a of the main frame 203. Thereby, the head pipe 202 can turn relative to the main frame 203 about a central line L3 extending longitudinally of the shaft portion 202a. The central line L3 of the shaft portion 102a of the head pipe 102 is an example of "axis" in the invention. The angular bearing 209 is an example of "bearing" in the invention. The angular bearing 209 is arranged so that its central axis becomes substantially the same as the central line L3 extending longitudinally of the shaft portion 202a of the head pipe 202. An extension of the central line L3 extending longitudinally is formed to extend rearwardly downward (rearward and obliquely downward) and to pass through the vicinity of a contact point between the rear wheel 10 and the ground 100 as shown in Fig. 19. In a riderless state, the centre G of gravity is arranged above the extension of the central line L3.

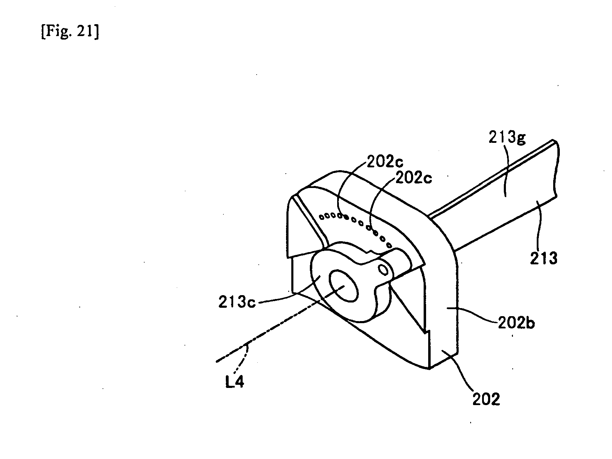

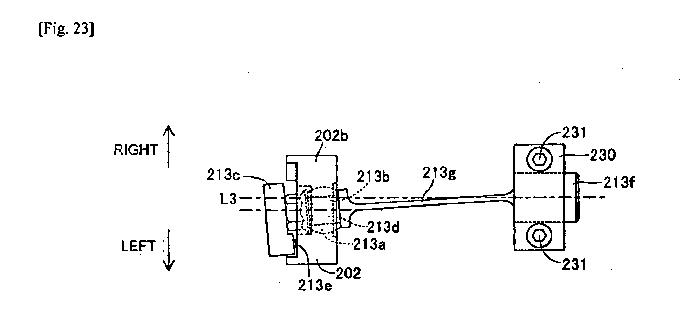

In the third embodiment, the head pipe 202 and the main frame 203 are connected to each other with the spring member 213 therebetween as shown in Fig. 20. The spring member 213 is formed from spring steel. Specifically, a ball joint 213a is provided on one end of the spring member 213. The ball joint 213a is mounted turnably to a support 202b formed on an upper portion of the head pipe 202. Thereby, the one end side of the spring member 213 turns about the central line L3 integrally with the shaft portion 202a of the head pipe 202. Recesses 202c (see Fig. 21) are formed on the support 202b of the head pipe 202 to be arranged every predetermined angle over about 90 degrees about a central line L4 disposed substantially in parallel to the central line L3. A bolt portion 213d of an adjustment lever 213c is inserted into and fixed to an insertion hole 213b of the ball joint 213a. Thereby, the spring member 213 can be turned about the central line L4 by turning the adjustment lever 213c about the central line L4. A projection 213e (see Fig. 23) sized corresponding to the recess 202c on the support 202b is provided on an opposite side of the adjustment lever 213c to the support 202b as shown in Fig. 21. The projection 213e (see Fig. 23) is biased toward the support 202b by a compression spring (not shown) arranged in the adjustment lever 213c. Thereby, when the adjustment lever 213c is turned about the central line L4, the projection 213e (see Fig. 23) of the adjustment lever 213c can be caused to engage with the recesses 202c of the support 202b, which are formed every predetermined angle, so that it becomes possible to fix the adjustment lever 213c to the support 202b in a predetermined angular position.

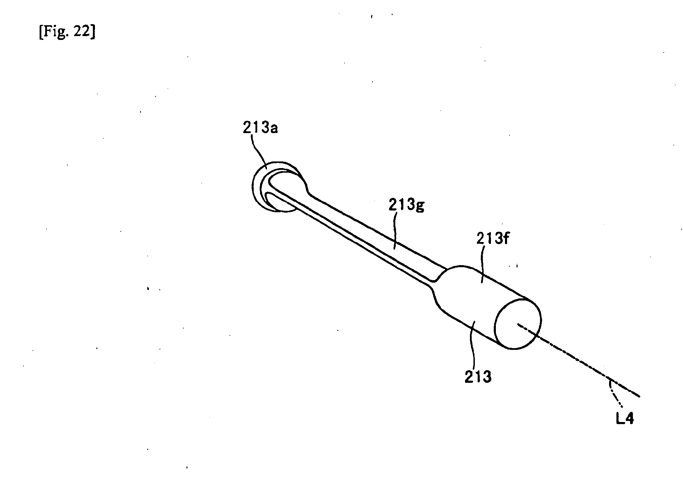

The other end 213f of the spring member 213 is substantially columnar-shaped as shown in Fig. 22. The other end 213f is arranged so that its central axis becomes substantially the same as the central line L4 as shown in Fig. 20. The other end 213f is mounted turnably to a recess 203b, which is formed on an upper portion of the main frame 203, by a cap 230 and a bolt 231 to be able to turn about the central line L4.

In the third embodiment, a central portion 213g of the spring member 213 arranged between the ball joint 213a and the other end 213f is in the form of a flat plate made of spring steel. The plate has a thickness of about 1 mm and functions to generate stress upon flexure. The spring constant can be adjusted in a direction of flexure (a left and right direction) by using the adjustment lever 213c to turn the spring member 213 about the central line L4.

The spring member 213 is arranged so that it is put in a non-loaded state (a state, in which an angle of twist is 0 degree) in the case where the front wheel 7 and the rear wheel 10 are arranged in the same plane and it is put in a loaded state in the case where the head pipe 202 is turned relative to the main frame 203 and so the front wheel 7 and the rear wheel 10 are not arranged in the same plane. Specifically, as shown in Fig. 23, when the head pipe 202 is turned to the left about the central line L3, the support 202b of the head pipe 202 is also turned to the left about the central line L3, so that the support 202b of the head pipe 202 is moved leftwardly of the central line L3 as viewed in plan view. At this time, the one end side of the spring member 213 is moved leftwardly of the central line L3 and the other end 213f of the spring member 213 is arranged on the central line L3, so that the central portion 213g of the spring member 213 flexes to the left to be put in a loaded state.

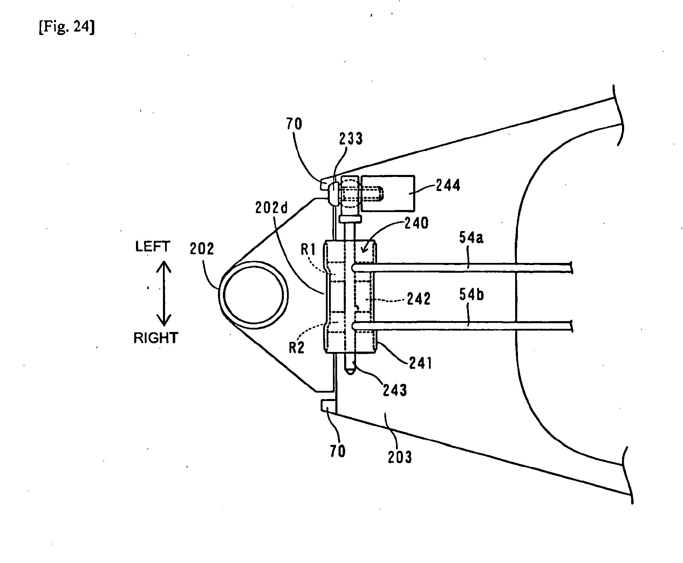

In the third embodiment, a cylinder support 202d is provided integrally on a lower portion of the head pipe 202 as shown in Fig. 20. Mounted to the cylinder support 202d is a hydraulic cylinder 240 as an actuator, which turns the head pipe 202 relative to the main frame 203. The hydraulic cylinder 240 is an example of "cylinder" and "centre of gravity moving means" in the invention. The hydraulic cylinder 240 comprises, as shown in Fig. 24, a tube 241, a piston 242 arranged inside the tube 241, a piston rod 243 fixed to the piston 242, and a piston rod support 244, which supports an end of the piston rod 243. The tube 241 is fixed to the cylinder support 202d by a bolt 232 as shown in Fig. 20. As shown in Fig. 24, an interior of the tube 241 is divided into two oil-filled regions R1, R2 by the piston 242. The piston rod 243 is arranged to extend through the tube 241. The piston rod support 244 is fixed to a lower portion of the main frame 203. That is, in the third embodiment, the tube 241 of the hydraulic cylinder 240 is connected to a side of the head pipe 202, and the piston 242 and the piston rod 243 of the hydraulic cylinder 240 are connected to a side of the main frame 203 unlike the first embodiment. The piston rod support 244 is ball-joined to the end of the piston rod 243 by a bolt 233. Thereby, the piston rod support is provided in order to make the piston rod 243, which is inserted into the tube 241, movable relative to the piston rod support 244 in a left and right direction (see Fig. 24) in the case where the tube 241 turns arcuately about the central line L3 (see Fig. 20) of the angular bearing 209. Thereby, since the arcuate turning movement is converted into linear movement, the piston rod 243 and the piston 242 can move smoothly in the tube 241.

In the third embodiment, the pump part 50 is arranged rearwardly and obliquely upwardly of the hydraulic cylinder 240 to supply an oil to the hydraulic cylinder 240. The hydraulic cylinder 140 and the pump part 50 are connected to each other by two hydraulic pipes 54a, 54b.

In the third embodiment, the head pipe 202 and the main frame 203 are connected to each other with the spring member 213 therebetween as described above whereby the head pipe 202 and the main frame 203 can be put in a state of not turning relative to each other by a load (twist force) of the spring member 213 in the case where the lane line follow-up control of the motorcycle 201 cannot be exercised due to failure of the control device 61 of the lane line follow-up control unit 60. In this condition the side of the front wheel 7 and the side of the rear wheel 10 can be arranged to be parallel to each other. As a result, running of the motorcycle 201 can be continued naturally in the case where the control device 61 of the lane line follow-up control unit 60 malfunctions.

Other effects of the third embodiment are the same as those in the first embodiment described above.

The embodiments disclosed herein are exemplary in all respects and not limitative. The scope of the invention is indicated not by the descriptions of the embodiments but by the scope of the claims.

For example, while the embodiments indicate a motorcycle as an example of vehicles, the invention is not limited thereto but can be applied to other vehicles, such as motor tricycles, etc., provided that they can be turned by moving a centre of gravity.

In addition, while the embodiments have been described with respect to an example in which the lane line follow-up control is automatically exercised when a starter switch is made ON, the invention is not limited thereto but the lane line follow-up control may be switched over to ON state or OFF state according to a driver's will with the use of a manual type switch.

Furthermore, while the embodiments have given an example in which the control device 61 of the lane line follow-up control unit 60, the speed sensor 62, the inclination sensor 63, and the earth magnetism sensor 64 are mounted on a control board (not shown) arranged in the vicinity of the seat 26, the invention is not limited thereto. For example, the control device 61, the speed sensor 62, the inclination sensor 63, and the earth magnetism sensor 64 may be mounted in the ECU (Engine Control Unit).

Additionally, while the embodiments have used a hydraulic cylinder as an actuator, the invention is not limited thereto. For example, an electrically driven actuator such as a motor, etc. may be used.

Finally, while the first embodiment gives an example in which a conical roller bearing (tapered roller bearing) is used to support the head pipe and the main frame to enable the same to turn relative to each other, and the second and third embodiments give an example in which an angular bearing is used to support the head pipe and the main frame to enable the same to turn relative to each other, the invention is not limited thereto. For example an angular bearing may be used in the motorcycle according to the first embodiment and a conical roller bearing may be used in the motorcycles according to the second and third embodiments in order to support the head pipe and the main frame to enable the same to turn relative to each other. Furthermore, the motorcycles according to the second and third embodiments may use other bearings than a conical roller bearing and an angular bearing to support the head pipe and the main frame to enable the same to turn relative to each other.

### Description of Reference Numerals and Signs

1, 101, 201: motorcycle (vehicle)
2, 102, 202: head pipe (front frame)
2a, 102a, 202a: shaft portion (first bearing mount)
3, 103, 203: main frame (rear frame)
3a: shaft insertion hole (second bearing mount)
7: front wheel
9: conical roller bearing (bearing)
10: rear wheel
40, 140, 240: hydraulic cylinder (cylinder, centre of gravity moving means)
50: pump part
51: oil pump + accumulator
53: switching valve
60: lane line follow-up control unit
61: control device (control means, lane line detection means)
62: speed sensor (speed detection means)
63: inclination sensor (inclination detection means)
64: earth magnetism sensor (inclination detection means)
65: vehicle-mounted camera (camera, lane line detection means)
70: stopper (restriction member)
100: ground
103a, 203a: shaft insertion portion (second bearing mount)
109, 209: angular bearing (bearing)
113: torsion spring
213: spring member
L1: turning axis (axis)
L2: axis of twist (axis)
L3: central line (axis)

## Claims

1. A vehicle (1, 101, 201) comprising:
a front frame (2, 102, 202) which supports a front wheel (7); and
a rear frame (3, 103, 203) which supports a rear wheel (10) and to which the front frame is movably mounted;
**characterised in that** the vehicle further comprises:
centre of gravity moving means (40, 140, 240) for moving one of the front frame and the rear frame relative to the other to thereby move the centre of gravity (G) of the vehicle; and
lane line detection means (61, 65) for detecting a travelling direction of the vehicle; and
wherein the centre of gravity moving means is constructed and arranged to move the centre of gravity to maintain the vehicle on the lane line detected by the lane line detection means.

2. The vehicle according to claim 1, further comprising:
inclination detection means (63, 64) for detecting inclination of a body of the vehicle (1, 101, 201);
speed detection means (62) for detecting the speed of the vehicle body; and
control means (61) for controlling operation of the centre of gravity moving means (40, 140, 240) on the basis of results of detection by the inclination detection means, the speed detection means and the lane line detection means.

3. The vehicle according to claim 2, wherein the control means (61) is arranged to predict a travelling direction of the vehicle (1, 101, 201) on the basis of results of detection by the inclination detection means (63, 64) and the speed detection means (62) and is arranged to control the centre of gravity moving means (40, 140, 240) to inhibit the predicted travelling direction of the vehicle from deviating from the travelling direction of the vehicle detected by the lane line detection means (61, 65).

4. The vehicle according to any one of the preceding claims, wherein the movable mounting of the front frame (2, 102, 202) to the rear frame (3, 103, 203) allows the frames to turn relative to each other about an axis (L1) extending in a longitudinal direction, and
the centre of gravity moving means (40, 140, 240) is arranged to turn one of the front and rear frames relative to the other frame to thereby move the centre of gravity (G).

5. The vehicle according to claim 4, wherein turning of one of the front and rear frames (2, 3, 102, 103, 202, 203) relative to the other frame is arranged to give the rear wheel (10) supported by the rear frame (3, 103, 203) a steering angle in an opposite direction to the direction in which the centre of gravity (G) is moved by the centre of gravity moving means (40, 140, 240).

6. The vehicle according to claim 4 or claim 5, wherein the centre of gravity moving means comprises a cylinder (40, 140, 240) for turning one of the front and rear frames (2, 3, 102, 103, 202, 203) relative to the other frame.

7. The vehicle according to any one of claims 4 to 6, further comprising a restriction means (70) for restricting the angle by which the front frame (2) may turn relative to the rear frame (3).

8. The vehicle according to any one of claims 4 to 7, wherein an extension of the axis (L1) extending in the longitudinal direction passes through the vicinity of a contact point between the rear wheel (10) and the ground (100).

9. The vehicle according to any one of claims 4 to 8, further comprising a bearing (9) arranged between the front frame (2, 102, 202) and the rear frame (3, 103, 203) to support the front frame and the rear frame to enable them to turn relative to each other.

10. The vehicle according to claim 9, wherein
the front frame comprises a head pipe (2, 102, 202),
the head pipe comprises a first bearing mount (2a, 102a, 202a) formed to project rearwardly of the head pipe, having a centre of turning on the axis (L1) extending in the longitudinal direction, and having an outer peripheral surface to which the bearing (9) is mounted, and
the rear frame comprises a second bearing mount (3a) arranged in opposition to the first bearing mount, and having an inner peripheral surface to which the bearing (9) is also mounted.

11. The vehicle according to any one of the preceding claims, further comprising a torsion spring (113) connected between the front frame (102) and the rear frame (103).

12. The vehicle according to claim 11, wherein the torsion spring (113) is arranged to be in an unloaded state when a side of the front wheel (7) and a side of the rear wheel (10) are arranged in parallel to one other.

## Patentansprüche

1. Fahrzeug (1, 101, 201), aufweisend:
- einen vorderen Rahmen (2, 102, 202), der ein Vorderrad (7) stützt, und
- einen hinteren Rahmen (3, 103, 203), der ein Hinterrad (10) stützt und an dem der vordere Rahmen beweglich angebracht ist,
**dadurch gekennzeichnet, dass** das Fahrzeug weiterhin aufweist:
- Schwerpunkt-Bewegungsmittel (40, 140, 240) zum Bewegen des vorderen Rahmens oder des hinteren Rahmens relativ zu dem jeweils anderen und **dadurch** Bewegen des Schwerpunkts (G) des Fahrzeugs, und
- Fahrbahnlinien-Detektionsmittel (61, 65) zum Detektieren einer Fahrtrichtung des Fahrzeugs, und
wobei die Schwerpunkt-Bewegungsmittel so konstruiert und angeordnet sind, dass der Schwerpunkt bewegt wird, um das Fahrzeug auf der von den Fahrbahnlinien-Detektionsmitteln detektierten Fahrbahnlinie zu halten.

2. Fahrzeug nach Anspruch 1, weiterhin aufweisend:
- Neigungs-Detektionsmittel (63, 64) zum Detektieren einer Neigung eines Körpers des Fahrzeugs (1, 101, 201),
- Geschwindigkeits-Detektionsmittel (62) zum Detektieren der Geschwindigkeit des Fahrzeug-Körpers, und
- Steuermittel (61) zum Steuern eines Betriebes der Schwerpunkt-Bewegungsmittel (40, 140, 240) auf der Basis von Ergebnissen einer Detektion durch die Neigungs-Detektionsmittel, die Geschwindigkeits-Detektionsmittel und die Fahrbahnlinien-Detektionsmittel.

3. Fahrzeug nach Anspruch 2, wobei die Steuermittel (61) ausgestaltet sind, eine Fahrtrichtung des Fahrzeugs (1, 101, 201) auf der Basis von Ergebnissen einer Detektion durch die Neigungs-Detektionsmittel (63, 64) und die Geschwindigkeits-Detektionsmittel (62) vorherzusagen, und ausgestaltet sind, die Schwerpunkt-Bewegungsmittel (40, 140, 240) zu steuern, so dass die vorhergesagte Fahrtrichtung des Fahrzeugs verhindert wird, von der Fahrtrichtung des Fahrzeugs, die durch die Fahrbahnlinien-Detektionsmittel (61, 65) detektiert wird, abzuweichen.

4. Fahrzeug nach einem der vorhergehenden Ansprüche, wobei die bewegliche Anbringung des vorderen Rahmens (2, 102, 202) an dem hinteren Rahmen (3, 103, 203) es den Rahmen ermöglicht, relativ zueinander um eine Achse (L1) zu drehen, die sich in einer Längsrichtung erstreckt und die Schwerpunkt-Bewegungsmittel (40, 140, 240) ausgestaltet sind, den vorderen oder hinteren Rahmen relativ zu dem anderen Rahmen zu drehen, um **dadurch** den Schwerpunkt (G) zu bewegen.

5. Fahrzeug nach Anspruch 4, wobei ein Drehen von dem vorderen oder hinteren Rahmen (2, 3, 102, 103, 202, 203) relativ zu dem anderen Rahmen ausgestaltet ist, dem hinteren Rad (10), das von dem hinteren Rahmen (3, 103, 203) gestützt wird, einen Steuerwinkel in einer entgegengesetzten Richtung zu der Richtung zu geben, in der der Schwerpunkt (G) durch die Schwerpunkt-Bewegungsmittel (40, 140, 240) bewegt wird.

6. Fahrzeug nach Anspruch 4 oder Anspruch 5, wobei die Schwerpunkt-Bewegungsmittel einen Zylinder (40, 140, 240) aufweisen, zum Drehen des vorderen oder hinteren Rahmens (2, 3, 102, 103, 202, 203) relativ zu dem anderen Rahmen.

7. Fahrzeug nach einem der Ansprüche 4 bis 6, weiterhin aufweisend Beschränkungsmittel (70) zum Beschränken des Winkels, um den der vordere Rahmen (2) relativ zu dem hinteren Rahmen (3) drehen kann.

8. Fahrzeug nach einem der Ansprüche 4 bis 7, wobei eine Verlängerung der Achse (L1), die sich in der Längsrichtung erstreckt, durch die Nachbarschaft eines Kontaktpunkts zwischen dem hinteren Rad (10) und dem Untergrund (100) verläuft.

9. Fahrzeug nach einem der Ansprüche 4 bis 8, weiterhin aufweisend ein Lager, das zwischen dem vorderen Rahmen (2, 102, 202) und dem hinteren Rahmen (3, 103, 203) angeordnet ist, um den vorderen Rahmen und den hinteren Rahmen zu stützen, um es diesen zu ermöglichen, relativ zueinander zu drehen.

10. Fahrzeug nach Anspruch 9, wobei
- der vordere Rahmen ein Kopfrohr (2, 102, 202) aufweist,
- das Kopfrohr eine erste Lager-Halterung (2a, 102a, 202a) aufweist, die ausgeformt ist, rückseitig von dem Kopfrohr vorzustehen, und die ein Drehzentrum auf der Achse (L1) hat, die sich in der Längsrichtung erstreckt, und die eine äußere periphere Oberfläche hat, an der das Lager (9) angebracht ist, und
- der hintere Rahmen eine zweite Lager-Halterung (3a) aufweist, die der ersten Lager-Halterung gegenüberliegend angeordnet ist, und die eine innere periphere Oberfläche hat, an der das Lager (9) ebenfalls angebracht ist.

11. Fahrzeug nach einem der vorhergehenden Ansprüche, weiterhin aufweisend eine Torsionsfeder (113), die zwischen dem vorderen Rahmen (102) und dem hinteren Rahmen (103) verbunden ist.

12. Fahrzeug nach Anspruch 11, wobei die Torsionsfeder (113) derart angeordnet ist, dass sie in einem unbelasteten Zustand ist, wenn eine Seite des vorderen Rades (7) und eine Seite des hinteren Rades (10) parallel zueinander angeordnet sind.

## Revendications

1. Véhicule (1, 101, 201), comprenant :
un châssis avant (2, 102, 202) qui supporte une roue avant (7) ; et
un châssis arrière (3, 103 ,203) qui supporte une roue arrière (10) et sur lequel le châssis avant est monté de façon mobile ;
**caractérisé en ce que** le véhicule comprend de plus :
des moyens de déplacement de centre de gravité (40, 140, 240) pour déplacer l'un parmi le châssis avant et le châssis arrière par rapport à l'autre afin de déplacer par conséquent le centre de gravité (G) du véhicule ; et
des moyens de détection de ligne de voie de circulation (61, 65) pour détecter une direction de déplacement du véhicule ; et
dans lequel les moyens de déplacement de centre de gravité sont construits et agencés de façon à déplacer le centre de gravité afin de maintenir le véhicule sur la ligne de voie de circulation détectée par des moyens de détection de ligne de voie de circulation.

2. Véhicule selon la revendication 1, comprenant de plus :
des moyens de détection d'inclinaison (63, 64) pour détecter une inclinaison d'un corps du véhicule (1, 101, 201) ;
des moyens de détection de vitesse (62) pour détecter la vitesse du corps de véhicule ; et
des moyens de commande (61) pour commander le fonctionnement des moyens de déplacement de centre de gravité (40, 140, 240) en fonction de résultats de détection des moyens de détection d'inclinaison, des moyens de détection de vitesse et des moyens de détection de ligne de voie de circulation.

3. Véhicule selon la revendication 2, dans lequel les moyens de commande (61) sont configurés de façon à prédire une direction de déplacement du véhicule (1, 101, 201) en fonction de résultats de détection des moyens de détection d'inclinaison (63, 64) et des moyens de détection de vitesse (62), et sont configurés de façon à commander les moyens de déplacement de centre de gravité (40, 140, 240) de façon à empêcher la direction de déplacement prédite du véhicule de s'écarter de la direction de déplacement du véhicule détectée par les moyens de détection de ligne de voie de circulation (61, 65).

4. Véhicule selon l'une quelconque des revendications précédentes, dans lequel le montage mobile du châssis avant (2, 12, 202) et du châssis arrière (3, 103, 203) permet aux châssis de tourner l'un par rapport à l'autre autour d'un axe (L1) s'étendant dans une direction longitudinale, et
les moyens de déplacement de centre de gravité (40, 140, 240) sont configurés de façon à faire tourner l'un parmi les châssis avant et arrière par rapport à l'autre châssis de façon à déplacer par conséquent le centre de gravité (G).

5. Véhicule selon la revendication 4, dans lequel la rotation de l'un des châssis avant et arrière (2, 3, 102, 103, 202, 203) par rapport à l'autre châssis est agencée de façon à donner à la roue arrière (10) supportée par le châssis arrière (3, 103, 203) un angle de direction dans une direction opposée à la direction dans laquelle le centre de gravité (G) est déplacé par les moyens de déplacement de centre de gravité (40, 140, 240).

6. Véhicule selon la revendication 4 ou la revendication 5, dans lequel les moyens de déplacement de centre de gravité comprennent un vérin (40, 140, 240) pour faire tourner l'un des châssis avant et arrière (2, 3, 102, 103, 202, 203) par rapport à l'autre châssis.

7. Véhicule selon l'une quelconque des revendications 4 à 6, comprenant de plus des moyens de restriction (70) pour restreindre l'angle dont le châssis avant (2) peut tourner par rapport au châssis arrière (3).

8. Véhicule selon l'une quelconque des revendications 4 à 7, dans lequel une extension de l'axe (L1) s'étendant dans la direction longitudinale traverse le voisinage d'un point de contact entre la roue arrière (10) et le sol (100).

9. Véhicule selon l'une quelconque des revendications 4 à 8, comprenant de plus un palier (9) disposé entre le châssis avant (2, 102, 202) et le châssis arrière (3, 103, 203) pour supporter le châssis avant et le châssis arrière afin de leur permettre de tourner l'un par rapport à l'autre.

10. Véhicule selon la revendication 9, dans lequel :
le châssis avant comprend un tube de potence (2, 102, 202),
le tube de potence comprend une première monture de palier (2a, 102a, 202a) formée de façon à faire saillie vers l'arrière du tube de potence, ayant un centre de rotation sur l'axe (L1) s'étendant dans la direction longitudinale, et ayant une surface périphérique extérieure sur laquelle est monté le palier (9), et
le châssis arrière comprend une deuxième monture de palier (3a) disposée en opposition avec la première monture de palier, et ayant une surface périphérique intérieure dans laquelle le palier (9) est également monté.

11. Véhicule selon l'une quelconque des revendications précédentes, comprenant de plus un ressort de torsion (113) relié entre le châssis avant (102) et le châssis arrière (103).

12. Véhicule selon la revendication 11, dans lequel de ressort de torsion (113) est configuré de façon à être dans un état non chargé lorsqu'un côté de la roue avant (7) et un côté de la roue arrière (10) sont disposés parallèlement l'un par rapport à l'autre.
